# EUROPÄISCHE PATENTSCHRIFT

(11) **EP 4 140 656 B1**
(45) Veröffentlichungstag und Bekanntmachung des Hinweises auf die Patenterteilung: **27.05.2026**
(21) Anmeldenummer: 21290055.9
(22) Anmeldetag: 31.08.2021
(51) Int. Cl.: B25F 5/00

(54) **DIVERSIFIZIERTE HANDWERKERAUSSTATTUNG MIT TOKEN-KOMPATIBLEN HANDWERKERGERÄTEN**
DIVERSIFIED HAND TOOL EQUIPMENT WITH TOKENT-COMPATIBLE HAND TOOLS
ÉQUIPEMENT DIVERSIFIÉ D'ARTISAN POURVU D'OUTILS COMPATIBLES AVEC UN JETON

(43) Veröffentlichungstag der Anmeldung: 01.03.2023
(73) Patentinhaber: Adolf Würth GmbH & Co. KG, 74653 Künzelsau (DE); Würth International AG, 7000 Chur (CH)
(72) Erfinder: Rosskamp, Heiko, 73099 Adelberg (DE); Marquette, Adrien, 74523 Schwäbisch Hall (DE); Aschoff, Louisa, 74632 Neuenstein (DE)
(74) Vertreter: Dilg, Haeusler, Schindelmann Patentanwaltsgesellschaft mbH

(56) Entgegenhaltungen:
- EP-A1- 1 720 122
- WO-A1-2006/021047
- WO-A1-2020/125839
- US-A1- 2015 350 345
- US-A1- 2017 177 894
- US-A1- 2019 067 751

## Beschreibung

Die Erfindung betrifft eine Handwerkerausstattung und ein Verfahren zum benutzerbezogenen Verwalten von Handwerkergeräten mittels eines Token einer Handwerkerausstattung.

Herkömmliche Handgeräte werden von einem Benutzer direkt gesteuert. Beispielsweise wird eine Bohrmaschine dadurch gesteuert, dass ein Benutzer einen geeigneten Bohrer in die Bohrmaschine einsetzt und dann eine Betätigungstaste der Bohrmaschine betätigt. Wenn ein Benutzer ohne Spezialkenntnisse mittels eines solchen Handgeräts eine delikate Handwerkaufgabe ausführt, kann es zu einer Fehlbedienung, einem unerwünschten Ergebnis und einer Gefährdung der Betriebssicherheit kommen.

Dokument US 2017/177894 A1 offenbart eine Handwerkerausstattung gemäß dem Oberbegriff des Patentanspruchs 1.

DE 10258900 A1 offenbart einen Akkuschrauber zum Festschrauben von Schraubkomponenten, mit einem Schraubermotor, der von einer autarken, am Akkuschrauber angeordneten Spannungsversorgung mit elektrischer Spannung versorgt wird, mindestens drei Messeinrichtungen, die zum Überwachen von Schraubparametern während des Einschraubvorgangs vorgesehen sind, nämlich einem Drehmomentsensor, mit dem das vom Schraubermotor erzeugte Anzugsdrehmoment messbar ist, einem Drehwinkelsensor, mit dem, ausgehend von einer vorgegebenen Messstellung, der aktuelle Einschraubwinkel messbar ist, und einem Stromsensor, mit dem der Antriebsstrom des Schraubermotors messbar ist. Ferner ist eine Überwachungselektronik vorgesehen, welche den Schraubermotor abschaltet, wenn gleichzeitig das Anzugsdrehmoment, der Einschraubwinkel und der Antriebsstrom jeweils innerhalb eines vorgegebenen, zugeordneten Soll-Parameter-Fensters liegen.

Insbesondere bei schwierigen oder unüblichen Bearbeitungsaufgaben mittels eines Handgeräts geraten herkömmliche Handgeräte an ihre Grenzen.

Es ist eine Aufgabe der vorliegenden Erfindung, einen Betrieb eines Handgeräts in einfacher, sicherer und fehlerrobuster Weise zu ermöglichen.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Gemäß einem Ausführungsbeispiel der vorliegenden Erfindung ist eine Handwerkerausstattung geschaffen, aufweisend eine Mehrzahl von Handwerkergeräten, von denen zumindest einige eine mechanische Aufnahmeeinrichtung zum mechanischen Koppeln mit einer mechanischen Kopplungseinrichtung eines Token aufweisen, und den Token mit einem Prozessor und mit der mechanischen Kopplungseinrichtung zum wahlweisen mechanischen Koppeln mit einer jeweiligen mechanischen Aufnahmeeinrichtung des jeweiligen Handwerkergeräts, wobei die Handwerkergeräte mindestens zwei unterschiedliche Elemente aus einer Gruppe ausweisen, die besteht aus folgenden Elementen: Einem elektrischen Handgerät; einem Werkzeug oder einem Werkzeugsatz; einem Bevorratungssystem; einem Verbrauchsgut; und einem Fahrzeug.

Gemäß einem weiteren Ausführungsbeispiel der Erfindung ist ein Verfahren zum benutzerbezogenen Verwalten von Handwerkergeräten mittels eines Token einer Handwerkerausstattung mit den oben beschriebenen Merkmalen bereitgestellt, wobei das Verfahren ein mechanisches Koppeln der mechanischen Kopplungseinrichtung des Token mit einer mechanischen Aufnahmeeinrichtung von einem ausgewählten der Handwerkergeräte, und nach erfolgtem mechanischen Koppeln, ein Steuern des gekoppelten Handwerkergeräts mittels des Prozessors des Token aufweist.

Im Rahmen der vorliegenden Anmeldung kann unter einem "Token" insbesondere eine Erkennungsmarke verstanden werden, die eine Funktionskopplung zwischen dem Token und einem Handwerkergerät ausbilden kann. Eine solche Erkennungsmarke kann in einem gekoppelten System zum Einsatz kommen, welches den Token, ein damit mechanisch gekoppeltes Handwerkergerät und optional ein oder weitere Geräte oder Knoten umfassen kann. Insbesondere kann ein Token eine Hardwarekomponente zur Identifizierung und/oder Authentifizierung eines Benutzers sein, dem der Token zugeordnet sein kann. Ein Token kann ein elektronischer Token sein und zum Beispiel eine prozessorbezogene Steuer-, Überwachungs- und/oder Kommunikationsfunktion bereitstellen.

Im Rahmen der vorliegenden Anmeldung kann unter einem "Handwerkergerät" insbesondere eine Vorrichtung verstanden werden, die von einem Handwerker während einer handwerklichen Tätigkeit genutzt wird. Hierbei kann es sich insbesondere um ein elektrisches Handgerät (wie zum Beispiel ein Akku-Schrauber), ein (insbesondere nichtelektrisches) Werkzeug (zum Beispiel ein Hammer, eine Zange, eine Feile, ein Schraubendreher oder ein Bohrer) oder einen Werkzeugsatz mit mehreren Werkzeugen oder Werkzeugelementen (zum Beispiel eine Bohrerbox mit Bohrern oder eine Bitbox mit Bits), ein Bevorratungssystem (zum Beispiel ein Werkzeugkoffer), Verbrauchsgut (zum Beispiel Bolzenanker oder eine Schachtel mit Schrauben), und/oder ein Fahrzeug (zum Beispiel ein Kraftfahrzeug, in dem ein Handwerker seine Ausrüstung zu einem Einsatzort verbringen kann, ein Gabelstapler oder ein Werkzeugwagen) und/oder um eine sonstige Handwerker-Gerätschaft (zum Beispiel eine Leiter) handeln. Ein Handwerkergerät kann auch ein Akku-Block oder ein Adapter zwischen einem Akku-Block und einer Bearbeitungseinrichtung (zum Beispiel einem Bohr-Modul einer Bohrmaschine) sein. Beispielsweise kann ein Token in einen solchen Akku-Block oder einen solchen Adapter eingesteckt werden.

Im Rahmen der vorliegenden Anmeldung kann unter einem "Handgerät" insbesondere eine portable Vorrichtung verstanden werden, die von einem Benutzer händisch betätigt und getragen werden kann und mit dem eine Handwerkeraufgabe erledigt werden kann, zum Beispiel eine Bearbeitung eines Untergrunds. Vorteilhaft kann es sich bei dem Handgerät um ein elektrisches Handgerät handeln, das mittels einer elektrisch erzeugten Antriebskraft betrieben werden kann. Ein solches elektrisches Handgerät kann mittels elektrischer Steuersignale - insbesondere bereitgestellt mittels eines Token - gesteuert werden. Insbesondere kann mittels eines Handgeräts und durch. Aufbringen einer Antriebskraft in Form einer Längskraft und/oder eines Drehmoments ein Loch in einem Untergrund gebohrt werden und/oder kann eine Antriebskraft in Form einer Längskraft und/oder eines Drehmoments auf ein in einem Untergrund zu setzendes Befestigungselement aufgebracht werden. Zum Beispiel kann das Handgerät zum Drehantreiben einer Bearbeitungseinrichtung und somit eines Bohrers und/oder eines Befestigungselements ausgebildet sein. Beispiele für elektrische oder motorische Handgeräte sind ein Akkuschrauber, ein Akku-Bohrschrauber, ein Drehschrauber, ein Impulsschrauber, ein. Ratschenschrauber, eine Bohrmaschine, ein Schlagschrauber (insbesondere ein Akku-Schlagschrauber) und ein Hammerbohrer.

Im Rahmen der vorliegenden Anmeldung kann unter einer "Handwerkerausstattung" insbesondere ein Satz mit einer Vielzahl von Handwerkergeräten verstanden werden, die ein Handwerker zur Erledigung von Handwerksaufgaben in Kombination verwendet. Beispielsweise kann eine Handwerkerausstattung mindestens zehn, insbesondere mindestens hundert, Handwerkergeräte beinhalten.

Im Rahmen dieser Anmeldung kann unter dem Begriff "Prozessor" insbesondere eine elektronische Entität verstanden werden, die ein Rechenwerk und/oder ein Steuerwerk enthalten kann und/oder zur Datenverarbeitung ausgebildet sein kann. Insbesondere kann ein solcher Prozessor auf ein mit dem Token mechanisch gekoppeltes Handwerkergerät steuernd einwirken und dadurch einen Betrieb oder eine Betriebsweise des Handwerkergeräts (insbesondere ein Handgerät) einstellen. Insbesondere kann der Prozessor die Einstellung des Betriebs bzw. der Betriebsweise des Handwerkergeräts oder eines Teils davon steuern, insbesondere basierend auf einem Benutzerprofil eines Benutzers des Token. Die Steuerlogik zwischen Token und Handwerkergerät und/oder zwischen Token und einem anderen Knoten (insbesondere einem weiteren Knoten oder einer zentralen Steuereinrichtung) kann zum Beispiel entsprechend einer Master-Slave-Architektur oder entsprechend einer Peer-to-Peer-Architektur erfolgen. Der Prozessor des Token kann alternativ oder ergänzend andere Funktionen übernehmen, zum Beispiel Sensorsignale eines Sensors des Token auswerten, eine Kommunikation mit einem anderen Knoten über ein Kommunikationsnetzwerks steuern, etc. Ein Prozessor kann zum Beispiel durch ein Prozessor-Bauteil, eine Mehrzahl von Prozessor-Bauteilen oder einen Teil eines Prozessor-Bauteils realisiert sein.

Im Rahmen der vorliegenden Anmeldung kann unter einer "mechanischen Aufnahmeeinrichtung eines Handwerkergeräts" insbesondere eine strukturelle Vorkehrung an einem Handwerkergerät verstanden werden, die geometrisch und vorzugsweise auch kommunikationstechnisch an eine mechanische Kopplungseinrichtung eines Token angepasst ist, der mit der mechanischen Aufnahmeeinrichtung mechanisch gekoppelt werden soll. Beispielsweise kann es sich bei der mechanischen Aufnahmeeinrichtung um eine Aufnahmeöffnung handeln, die zum formschlüssigen und/oder reibschlüssigen Aufnehmen eines Token oder eines Teils davon ausgebildet ist. Mit Vorteil können die mechanische Aufnahmeeinrichtung des Handwerkergeräts und die mechanische Kopplungseinrichtung des Token so aufeinander angepasst sein, dass beim Ausbilden einer mechanischen Kopplung zwischen der mechanischen Kopplungseinrichtung des Token und der mechanischen Aufnahmeeinrichtung des Handwerkergeräts simultan auch eine Kommunikationsverbindung bzw. eine Steuerverbindung zwischen Token und Aufnahmeeinrichtung ausgebildet wird. Beispielsweise kann das Ausbilden einer formschlüssigen Verbindung zwischen der mechanischen Aufnahmeeinrichtung und der mechanischen Kopplungseinrichtung simultan zum Ausbilden einer elektrisch leitfähigen Kopplung zwischen Token und Handwerkergerät führen, beispielsweise indem dadurch eine Verbindung von elektrischen Kontakten des Token und des Handwerkergeräts ausgebildet wird. Über solche elektrische Kontakte können dann elektrische Steuersignale von dem Token an das Handwerkergerät übertragen werden. Es ist auch möglich, dass durch das Ausbilden einer mechanischen Verbindung zwischen der mechanischen Aufnahmeeinrichtung und der mechanischen Kopplungseinrichtung ein kontaktloser Transponder (zum Beispiel ein RFID-Tag) des Token in einen Lesbarkeitsabstand eines Transponder-Lesegeräts (zum Beispiel ein RFID-Lesegerät) des Handwerkergeräts gebracht wird, sodass dann drahtlos Steuersignale von dem Token an das Handwerkergerät übertragen werden können.

Im Rahmen der vorliegenden Anmeldung kann unter einem "Werkzeug" insbesondere ein Handwerkzeug (zum Beispiel ein Hammer, eine Zange, eine Feile, ein Schraubendreher oder ein Meißel) oder eine in ein elektrisches Handgerät (zum Beispiel in eine Werkzeugmaschine) eingesetztes oder einzusetzendes Bearbeitungswerkzeug (zum Beispiel ein Bohrer, ein Bit oder ein Fräser) verstanden werden. Ein Werkzeug kann vorzugsweise nichtelektrisch sein. Allerdings kann ein Werkzeug in ein elektrisches Handgerät eingesetzt werden.

Im Rahmen der vorliegenden Anmeldung kann unter einem "Werkzeugsatz" insbesondere eine Anordnung mehrerer Werkzeuge oder Werkzeugelemente, insbesondere desselben Werkzeugtyps, verstanden werden. In einem solchen Werkzeugsatz können die mehreren Werkzeuge oder Werkzeugelemente in einer gemeinsamen Werkzeugaufnahmevorrichtung aufgenommen sein. Beispielsweise kann ein Werkzeugsatz eine Bohrerbox mit mehreren unterschiedlichen Bohrern oder eine Bitbox mit mehreren unterschiedlichen Bits sein.

Im Rahmen der vorliegenden Anmeldung kann unter einem "Bevorratungssystem" insbesondere eine Vorrichtung oder eine Anordnung aus Vorrichtungen zum Aufnehmen einer Vielzahl von elektrischen Handgeräten, Werkzeugen und/oder Werkzeugsätzen, Verbrauchsgütern, etc., verstanden werden. Insbesondere kann ein solches Bevorratungssystem als Regal, Koffer, Schublade, etc., ausgebildet sein.

Im Rahmen der vorliegenden Anmeldung können unter "Verbrauchsgut" insbesondere Teile verstanden werden, die einzeln oder als Gruppe von gemeinsam verpackten Teilen in einer gemeinsamen Packung angeordnet werden können und von einem Handwerker während einer Handwerkstätigkeit verbraucht werden und daher laufend nachgeliefert werden. Bei solchen Verbrauchsgütern kann es sich zum Beispiel um Schrauben, Dübel, Nägel, Bolzenanker und dergleichen handeln, die häufig als Gruppe in einer gemeinsamen Packung aufbewahrt werden, insbesondere bei einer Ausgestaltung der Verbrauchsgüter als C-Teile.

Im Rahmen der vorliegenden Anmeldung kann unter einem "Fahrzeug" insbesondere eine insbesondere rollend bewegbare Vorrichtung verstanden werden, die bestimmungsgemäß durch Aufbringen einer Antriebskraft bewegt werden kann. Insbesondere kann ein Fahrzeug ein motorisch bewegtes Fahrzeug sein, beispielsweise bewegt mittels eines Elektromotors und/oder eines Verbrennungsmotors. Beispiele hierfür sind Personenkraftwagen, Lastkraftwagen, Baustellenfahrzeuge (beispielsweise Bagger), Gabelstapler, etc. Alternativ kann ein Fahrzeug mittels Muskelkraft bewegt werden, zum Beispiel ein von einem Benutzer zu schiebender Werkstattwagen.

Im Rahmen der vorliegenden Anmeldung kann unter dem Begriff "mindestens zwei unterschiedliche Elemente aus einer Gruppe, die besteht aus einem elektrischen Handgerät, einem Werkzeug oder Werkzeugsatz, einem Bevorratungssystem, einem Verbrauchsgut, und einem Fahrzeug" insbesondere verstanden werden, dass von den fünf Elementen "elektrisches Handgerät" (A), "Werkzeug oder Werkzeugsatz" (B), "Bevorratungssystem" (C), "Verbrauchsgut" (D) und "Fahrzeug" (E) mindestens zwei unterschiedliche Elemente in der Handwerkerausstattung enthalten sind. Dies umfasst insbesondere die Konfigurationen A + B und optional C und/oder D und/oder E, A + C und optional A und/oder D und/oder E, A + D und optional B und/oder C und/oder E, A + E und optional B und/oder C und/oder D, B + C und optional A und/oder D und/oder E, B + D und optional A und/oder C und/oder E, B + E und optional A und/oder C und/oder D, C + D und optional A und/oder B und/oder E, C + E und optional A und/oder B und/oder D, und D + E und optional A und/oder B und/oder C. Darüber hinaus kann optional mindestens ein weiteres Element (zum Beispiel Hilfszubehör wie Leitern, Gerüste) Teil der Handwerkerausstattung sein.

Gemäß einem exemplarischen Ausführungsbeispiel der Erfindung ist eine Handwerkerausstattung geschaffen, bei der mehrere unterschiedliche Handwerkergeräte hoher Vielfalt bzw. Diversifizierung jeweils mit einem Token mechanisch gekoppelt werden können, wobei das Ausbilden einer solchen mechanischen Kopplung mit einer mechanischen Aufnahmeeinrichtung des Handwerkergeräts bzw. einer korrespondierenden mechanischen Kopplungseinrichtung des Token vorgenommen werden kann. Mit einem universell einsetzbaren Token, der mit einem beliebigen Handwerkergerät abnehmbar koppelbar sein kann, kann in benutzerdefinierter Weise jedes Handwerkergerät wahlweise mit einer Token-Funktion ausgerüstet werden. Beispielsweise kann ein Token mit Prozessorressource mit einem als elektrisches Handgerät ausgebildeten Handwerkergerät mechanisch gekoppelt werden, um das elektrische Handgerät mittels des Prozessors des Token zu steuern. Beispielsweise kann das Steuern des elektrischen Handgeräts mittels des Prozessors des Token in Einklang mit einem Berechtigungsprofil eines Benutzers des Token erfolgen, wodurch eine benutzerbezogene Nutzung eines elektrischen Handgeräts ermöglicht, verunmöglicht oder benutzerspezifisch adaptiert werden kann. Es ist alternativ oder ergänzend ebenfalls möglich, ein Token mit Prozessorressource zum Nachverfolgen der räumlichen Position eines mit dem Token mechanisch gekoppelten Handwerkergeräts zu verwenden. Dadurch ist es beispielsweise möglich, verlegtes oder verlorengegangenes Werkzeug oder Verbrauchsgut anhand des Token wieder aufzufinden. Hierfür kann ein Token beispielsweise mit einer Tracking-Funktion ausgebildet werden oder mit einem Tracker gekoppelt werden. Ferner ist es möglich, eine mechanische Kopplung eines Handwerkergeräts mit einem Token zu dem Zweck durchzuführen, das Handwerkergerät mittels des Token in einem Kommunikationsnetzwerk kommunizierfähig zu koppeln, zum Beispiel um mittels des Token mit einem Knoten in dem Kommunikationsnetzwerk zu kommunizieren. Durch eine kommunizierfähige Anbindung eines Token an ein Kommunikationsnetzwerk kann es beispielsweise auch möglich sein, über das Kommunikationsnetzwerk eine Nachbestellung von Verbrauchsgut in einem Bevorratungssystem auszulösen, wenn dessen Restbestand unter einen kritischen Wert abgesunken ist. Ein aufgrund seiner mechanischen Kopplungseinrichtung und seiner Prozessorressource universell einsetzbarer Token kann mit einem beliebigen von einer Mehrzahl von Handwerkergeräten einer komplexen Handwerkerausstattung über eine universelle mechanische Schnittstelle in Form von deren mechanischer Aufnahmeeinrichtung reversibel gekoppelt werden, um ein jeweiliges Handwerkergerät mit einer Token-Funktionalität auszurüsten.

Im Weiteren werden zusätzliche exemplarische Ausführungsbeispiele der Handwerkerausstattung und des Verfahrens beschrieben.

Gemäß einem exemplarischen Ausführungsbeispiel kann die Handwerkerausstattung mindestens einen weiteren Token mit einem weiteren Prozessor und mit einer mechanischen Kopplungseinrichtung zum wahlweisen mechanischen Koppeln mit einer jeweiligen mechanischen Aufnahmeeinrichtung eines jeweiligen anderen Handwerkergeräts aufweisen. Beispielsweise kann jedes einer Vielzahl von Handwerkergeräten einer Handwerkerausstattung mit einem zugehörigen Token ausgestattet werden. Vorteilhaft kann jeder der Token mit einem Prozessor ausgestattet sein, der entsprechend einer Funktion des jeweiligen Token konfiguriert sein kann. Mit Vorteil ist gemäß einem exemplarischen Ausführungsbeispiel der Erfindung für eine Handwerkerausstattung mit sehr unterschiedlichen Typen von Handwerkergeräten ein Satz von Token (jeweils mit Prozessorressource) bereitgestellt, wobei jeder der Token mittels bloßen Ausbildens einer mechanischen Kopplung mit einem jeweiligen Handwerkergerät eine spezifische Funktion in Bezug auf das jeweils zugeordnete Handwerkergerät bereitstellen kann. Dadurch ist ein beliebig skalierbares modulares System geschaffen, das in leistungsfähiger Weise Steuer- und/oder Überwachungsfunktionen bereitstellt.

Gemäß einem exemplarischen Ausführungsbeispiel kann der Token eine Kommunikationseinrichtung aufweisen und der mindestens eine weitere Token eine weitere Kommunikationseinrichtung aufweisen. Ferner können die Token mittels der Kommunikationseinrichtungen kommunizierfähig miteinander gekoppelt sein, insbesondere direkt oder über einen Knoten eines Kommunikationsnetzwerks. Unterschiedliche Token, die unterschiedlichen Handwerkergeräten zugeordnet sind, können also kommunizierfähig miteinander gekoppelt sein. Beispielsweise ermöglicht die kommunizierfähige Kopplung eines ersten Token, der an einem zwingend mit einer Arbeitsschutzausrüstung zu verwendendem elektrischen Handgerät angebracht ist, mit einem zweiten Token, der an besagter Arbeitsschutzausrüstung angebracht ist, die Erkennung der Verwendung der Arbeitsschutzausrüstung durch einen Benutzer durch den ersten Token aufgrund dessen Kommunikation mit dem zweiten Token.

Gemäß einem exemplarischen Ausführungsbeispiel kann der Token ausgebildet sein, bei mechanischem Koppeln der mechanischen Kopplungseinrichtung mit der mechanischen Aufnahmeeinrichtung des jeweiligen Handwerkergeräts mittels des Prozessors das besagte Handwerkergerät zu steuern. Im Rahmen der vorliegenden Anmeldung kann unter einer "mechanische Kopplungseinrichtung" insbesondere eine physische Struktur des Token verstanden werden, die zum Beispiel formschlüssig und/oder reibschlüssig mit einer korrespondierenden physischen Struktur eines Handwerkergeräts gekoppelt werden kann, um dadurch eine vorübergehende und wohldefinierte mechanische Verbindung zwischen Token und Handwerkergerät auszubilden. Beispielsweise kann der Token in eine entsprechend geformte Aufnahmeöffnung des Handwerkergeräts eingeführt werden, um Token und Handwerkergerät mechanisch zu koppeln. Hierbei kann die mechanische Kopplungseinrichtung ausgebildet sein, durch Ausbilden einer mechanischen Kopplung mit einem Handwerkergerät eine kommunizierfähige Kopplung zwischen Token und Handgerät herzustellen. Das Ausbilden einer mechanischen Kopplung zwischen einem Handwerkergerät und einem Token kann von dem Prozessor des Token als Wunsch des Benutzers zum Betrieb des Handwerkergeräts interpretiert werden und kann einen Abgleich eines personalisierten Benutzerprofils des Benutzers mit dem mechanisch gekoppelten Handwerkergerät auslösen. Durch diese Triggerlogik kann sehr schnell der Berechtigungsabgleich durchgeführt werden und die Benutzung des Handwerkergeräts durch den Benutzer freigegeben werden, falls das personalisierte Benutzerprofil dies zulässt.

Gemäß einem exemplarischen Ausführungsbeispiel kann der Token als Scheibe, insbesondere als Kreisscheibe, mit einem Durchmesser in einem Bereich von 1 cm bis 10 cm ausgebildet sein, insbesondere in einem Bereich von 2 cm bis 5 cm. Es ist auch möglich, dass der Token als Quader (insbesondere als Flachquader) mit einer Kantenlänge in einem Bereich von 1 cm bis 10 cm ausgebildet ist, insbesondere in einem Bereich von 2 cm bis 5 cm. Ein als kleine Scheibe ausgebildeter Token lässt sich von einem Benutzer bequem mitführen und erlaubt die Ausbildung einer mechanischen Kopplung mit einem Handwerkergerät in platzsparender Weise. Außerdem erlaubt das Ausbilden des Token als Kreisscheibe mit den genannten Dimensionen die Implementierung eines einen Benutzer des Token identifizierenden Sensors, insbesondere eines Fingerprintsensors, an einer Oberfläche des Token. Für einen Benutzer kann es zur Selbstidentifizierung, die eine Voraussetzung für das Ausbilden einer steuerfähigen Kopplung zwischen Token und Handwerkergerät sein kann, ausreichen, sich durch Auflegen eines Fingers auf den Fingerprintsensor zu identifizieren. Nach erfolgter Identifizierung kann dann in dem Token eine Berechtigung des identifizierten Benutzers zum Steuern des mit dem Token gekoppelten Handwerkergeräts überprüft werden. Nach erfolgreicher Überprüfung kann die Steuerung begonnen werden, bei erfolgloser Überprüfung kann die Steuerung unterbunden werden.

Gemäß einem exemplarischen Ausführungsbeispiel kann die mechanische Kopplungseinrichtung ausgebildet sein, den Token von dem Handwerkergerät nach dem mechanischen Koppeln wieder abnehmen zu können. Auf diese Weise kann ein Benutzer, der ein Handwerkergerät benutzen möchte, einen ihm zugeordneten Token mit dem Handwerkergerät mechanisch koppeln und nach Beendigung der Benutzung den Token wieder von dem Handwerkergerät abnehmen. Das Handwerkergerät kann ausgebildet sein, nur während Bestehens einer mechanischen Kopplung mit einem Token eine Steuerung des Handwerkergeräts durch den Token oder sogar eine Benutzung des Handwerkergeräts zuzulassen.

Gemäß einem exemplarischen Ausführungsbeispiel kann die mechanische Kopplungseinrichtung eine elektromechanische Schnittstelle aufweisen, insbesondere eine für unterschiedliche Handwerkergeräte universelle elektromechanische Schnittstelle. Unter einer elektromechanischen Schnittstelle kann hierbei verstanden werden, dass das Ausbilden einer mechanischen Verbindung zwischen der mechanischen Kopplungseinrichtung des Token und einer korrespondierenden mechanischen Aufnahme- oder Verbindungseinrichtung des Handwerkergerätes simultan zum Ausbilden einer elektrischen Kopplung zwischen Token und Handwerkergerät führt. Dann kann mit einem beispielsweise formschlüssigen Koppeln von Token und Handwerkergerät auch eine Übermittlung eines elektrischen Steuersignals von einem elektrischen Kontakt des Token zu einem elektrischen Kontakt des Handwerkergeräts ermöglicht werden. Eine solche Handwerkerausstattung ist besonders fehlerrobust im Betrieb.

Gemäß einem exemplarischen Ausführungsbeispiel kann der Token ausgebildet sein, bei mechanischem Koppeln der mechanischen Kopplungseinrichtung mit einem Handwerkergerät eine Kommunikationsverbindung, insbesondere eine kontaktlose oder kontaktbehaftete Kommunikationsverbindung, mit dem Handwerkergerät auszubilden. Bezugnehmend auf das vorangehend beschriebene Ausführungsbeispiel betreffend eine elektromechanische Kopplung zwischen Token und Handwerkergerät kann eine kontaktbehaftete elektrische Kommunikation zwischen Token und Handwerkergerät bevorzugt erst mit dem Ausbilden der mechanischen Verbindung ermöglicht werden. Dies ermöglicht einem Benutzer, die Steuerungshoheit durch einen intuitiven Verbindungsprozess zu behalten. Alternativ kann erst durch das Ausbilden einer mechanischen Kopplung zwischen dem Token und dem Handwerkergerät eine kontaktlose Kommunikationsverbindung zwischen Token und Handwerkergerät ausgebildet werden. Zum Beispiel kann erst durch Einführen des Token in das Handwerkergerät ein drahtloser Transponder (zum Beispiel ein RFID-Tag) des Token in einen Lesbarkeitsabstand eines Transponder-Lesegeräts (zum Beispiel ein RFID-Lesegerät) des Handwerkergeräts gebracht werden. Dies kann beispielsweise durch Verwenden eines kurzreichweitigen Kommunikationsprotokolls (zum Beispiel NFC, near field communication) für die drahtlose Kommunikation zwischen Token und Handwerkergerät erreicht werden.

Gemäß einem exemplarischen Ausführungsbeispiel kann der Token eine Kommunikationseinrichtung aufweisen, die zum Kommunizieren mittels eines Kommunikationsnetzwerks ausgebildet ist, insbesondere mittels des öffentlichen Internets, mittels eines Intranets und/oder mittels eines Mobilfunknetzwerks. Insbesondere kann der Token zum kryptografischen Kommunizieren unter Einsatz einer Kryptographieeinheit des Token ausgebildet sein. Eine solche Kommunikationseinrichtung kann zum Beispiel eine Sende- und/oder EmpfangsAntenne und eine zugehörige Prozessor-Ressource beinhalten, die eine beispielsweise drahtlose Kommunikation entsprechend einem Kommunikationsprotokoll des Kommunikationsnetzwerks mit einem oder mehreren anderen Knoten eines solchen Kommunikationsnetzwerks ermöglichen. Auf diese Weise kann der Token über die Steuerung eines mechanisch mit ihm gekoppelten Handwerkergerätes hinaus unidirektional oder bidirektional mit einem oder mehreren anderen Knoten kommunizieren, zum Beispiel um Informationen herunterzuladen (Download) und/oder heraufzuladen (Upload). Zum Beispiel kann ein Download von Information von einem kommunizierfähig gekoppelten Knoten auf den Token ein Download eines Benutzerprofils oder einer Ablaufsteuerung eine Bearbeitungsaufgabe beinhalten, die von einem Benutzer mittels eines Handwerkergeräts ausgeführt werden soll, das mit dem Token mechanisch gekoppelt ist. Zum Beispiel kann ein Upload von Information von dem Token auf einen kommunizierfähig gekoppelten Knoten ein Upload von Tracking-Daten beinhalten, die zu Dokumentationszwecken und/oder zu Qualitätsüberwachungszwecken ein Nachverfolgen eines Betriebs des Token und/oder eines damit gekoppelten Handwerkergeräts ermöglichen.

Gemäß einem exemplarischen Ausführungsbeispiel kann der Token ausgebildet sein, mittels der Kommunikationseinrichtung mit mindestens einem kommunizierfähig gekoppelten Knoten des Kommunikationsnetzwerks zu kommunizieren, der aus einer Gruppe ausgewählt ist, die besteht aus einem anderen Token, einem portablen Benutzerendgerät mit einer darauf gespeicherten App (die zum Kommunizieren mit einem Token konfiguriert sein kann), einer zentralen Steuereinrichtung (beispielsweise zum zentralen Verwalten oder Steuern von Handwerkergeräten einer Handwerkerausstattung), und einer Nachbestelleinrichtung zum Nachbestellen von Verbrauchsgütern zum Betrieb eines Handwerkergeräts. Gemäß einer Ausgestaltung können mehrere Token miteinander kommunizieren. Zum Beispiel kann ein erster Token mit einem ersten Handwerkergerät (zum Beispiel einem Handgerät wie etwa einem Schlagbohrer) und kann ein zweiter Token mit einem zweiten Handwerkergerät (zum Beispiel einer Arbeitsschutzausrüstung wie zum Beispiel einer Schutzbrille) mechanisch gekoppelt sein. Ist zum Beispiel für den Betrieb des Handgeräts die Verwendung einer Arbeitsschutzausrüstung vorgeschrieben, kann die Inbetriebnahme des Handgeräts davon abhängig gemacht werden, dass eine Kommunikation zwischen den beiden zugeordneten Token dokumentiert, dass der Benutzer des dem ersten Token zugeordneten Handgeräts die dem zweiten Token zugeordnete Arbeitsschutzausrüstung trägt. Es ist aber auch möglich, dass ein Benutzer ein Handwerkergerät von einem mit einer entsprechenden Software ausgerüsteten portablen Benutzerendgerät (zum Beispiel einem Mobilfunkgerät) und somit von entfernter Stelle aus steuert. Hierfür können das Benutzerendgerät und der Token miteinander über ein Kommunikationsnetzwerk kommunizieren. Bedarfsweise kann zum Steuern des Handwerkergeräts der Token auch Ressourcen des Benutzerendgeräts mitbenutzen, zum Beispiel eine Kamera-Ressource. Ferner ist es möglich, dass eine zentrale Steuereinrichtung eine Vielzahl von dezentralen Handwerkergeräten beispielsweise im Sinne von Benutzerprofilen steuert, die einzelnen Benutzern der dezentralen Handwerkergeräte eine benutzerspezifische Benutzung bestimmter Handwerkergeräte ermöglicht. Mit anderen Worten können Benutzerprofile von Benutzern an einer zentralen Steuereinrichtung gespeichert werden. Möchte ein mit einem Handwerkergerät mechanisch gekoppelter Token die Benutzung des Handwerkergeräts durch einen mittels des Token identifizierten Benutzer ermöglichen, kann der Token durch Kommunikation mit der zentralen Steuereinrichtung Zugriff auf das Benutzerprofil des zugehörigen Benutzers erlangen und die Benutzung des Handwerkergeräts durch diesen Benutzer nur dann zulassen, wenn die Benutzung des Handwerkergeräts durch den identifizierten Benutzer in Einklang mit dem Benutzerprofil steht. Zum Beispiel kann die Benutzung einer Kettensäge von einer entsprechenden Qualifikation oder Einweisung eines Benutzers abhängig gemacht werden, die in dem Benutzerprofil Niederschlag gefunden hat. Darüber hinaus kann es auch möglich sein, dass ein mit einem Handwerkergerät mechanisch gekoppelter Token einen Nachbestellungsbedarf zum Nachbestellen von Verbrauchsmaterial erkennt und an eine kommunizierfähig gekoppelte Nachbestelleinrichtung übermittelt. Beispielsweise kann ein solcher Token mit einem Verbrauchsmaterial aufnehmenden Behälter mechanisch gekoppelt sein und kann die sukzessive Entnahme von Verbrauchsmaterial aus diesem Behälter (zum Beispiel sensorisch) erkennen. Beispielsweise bei Absinken eines Restbestands von Verbrauchsmaterial unter einen vorgegebenen Schwellwert kann dann eine Nachbestellung durch den Token ausgelöst oder getriggert werden, und zwar durch direkte oder indirekte Kommunikation des Token mit der Nachbestelleinrichtung.

Gemäß einem exemplarischen Ausführungsbeispiel kann der Token ausgebildet sein, mittels der Kommunikationseinrichtung von einem kommunizierfähig gekoppelten Knoten des Kommunikationsnetzwerks einen Datensatz herunterzuladen, insbesondere einen einen Betriebsablauf des Handwerkergeräts definierenden Datensatz und/oder einen ein Benutzerprofil eines Benutzers des Token definierenden Datensatz. Eine kommunizierfähige Kopplung kann beispielsweise leitungsgebunden (zum Beispiel elektrisch über mindestens eine elektrische Leitung oder optisch über einen Lichtleiter) oder drahtlos (beispielsweise durch Übermittlung elektromagnetischer Strahlung, wie zum Beispiel sichtbares Licht, Infrarotlicht oder Hochfrequenzstrahlung) sein. Die genannten und/oder andere Daten können an zentraler Stelle des Kommunikationsnetzwerks, zum Beispiel bei einer zentralen Steuereinrichtung zum Steuern oder Verwalten einer Vielzahl von Handwerkergeräten, und somit mit insgesamt effizienter Ressourcenverwendung gespeichert sein. Bedarfsweise kann ein dezentraler - zum Beispiel mit einem Handwerkergerät mechanisch gekoppelter - Token über das Kommunikationsnetzwerk die Daten von der zentralen Steuereinrichtung oder einem anderen Knoten aus abrufen. Durch Abruf eines einen Betriebsablauf des Handwerkergeräts definierenden Datensatzes kann der Token Steuerinformationen zum entsprechenden Steuern des Handwerkergeräts zum Durchführen des besagten Betriebsablaufs erhalten und das Handwerkergerät nachfolgend entsprechend steuern. Zum Beispiel kann ein Setzen eines Befestigungselements (zum Beispiel einer Schraube) in einem Untergrund das Aufbringen eines bestimmten Drehmoments erfordern, dessen Größe der Token über das Kommunikationsnetzwerk abrufen kann. Es ist auch möglich, dass ein mittels des Token identifizierter Benutzer bestimmten Einschränkungen hinsichtlich der Verwendung eines mit dem Token mechanisch gekoppelten Handwerkergeräts unterworfen ist, sodass die Benutzung eines Handwerkergeräts durch einen bestimmten Benutzer durch den Token nur in Einklang mit einem entsprechenden Benutzerprofil zugelassen wird, das der Token über das Kommunikationsnetzwerk herunterladen kann.

Gemäß einem exemplarischen Ausführungsbeispiel kann der Token ausgebildet sein, mittels der Kommunikationseinrichtung zu einem kommunizierfähig gekoppelten Knoten des Kommunikationsnetzwerks einen Datensatz heraufzuladen, insbesondere einen Betriebsergebnisse und/oder Betriebsparameter eines Betriebs des Handwerkergeräts enthaltenden Datensatz. Zum Beispiel kann eine mittels eines Handwerkergeräts abgearbeitete Bearbeitungsaufgabe (zum Beispiel das Setzen eines Befestigungselements in einen Untergrund) in Form eines Datensatzes dokumentiert werden und als Betriebsergebnisse an einen Knoten des Kommunikationsnetzwerks (zum Beispiel eine zentrale Verwaltungs- oder Steuereinrichtung) übermittelt werden. Dies erlaubt eine spätere Nachverfolgung zu Dokumentations- und/oder Qualitätssicherungszwecken. Als Betriebsparameter im Zusammenhang mit der Abarbeitung einer Bearbeitungsaufgabe kann zum Beispiel ein tatsächlich aufgebrachtes Drehmoment eines Akku-Schraubers beim Einschrauben einer Schraube übermittelt werden.

Gemäß einem exemplarischen Ausführungsbeispiel kann der Prozessor ausgebildet sein, den Betrieb des mit dem Token gekoppelten Handwerkergeräts in Einklang mit einem in dem Token gespeicherten oder dem Token zugänglichen personalisierten Benutzerprofil, insbesondere in Einklang mit einem personalisierten Benutzerberechtigungsprofil, des Benutzers des Tokens zu steuern. Im Rahmen der vorliegenden Anmeldung kann unter einem "personalisierten Berechtigungsprofil eines Benutzers in Bezug auf ein Handwerkergerät" insbesondere ein spezifisch auf einen Benutzer bezogener Datensatz verstanden werden, der diesem Benutzer im Rahmen der Verwendung und/oder der Verwaltung eines bestimmten von Handwerkergeräten einer Handwerkerausstattung spezifische Nutzungsrechte (zum Beispiel Recht, ein Handgerät zu benutzen, wenn der Benutzer eine entsprechende Einweisung erhalten hat oder einen entsprechenden Führerschein besitzt), Nutzungsbeschränkungen (zum Beispiel Recht, nur ein Handgerät zu benutzen, das ein bestimmtes Maximalgewicht nicht überschreitet, oder wenn der Benutzer zugehörige Arbeitsschutzausrüstung trägt) und/oder Nutzungsverbote (zum Beispiel Verbot, ein Handgerät zu benutzen, wenn der Benutzer keine entsprechende Einweisung erhalten hat oder einen entsprechenden Führerschein nicht besitzt) zuweist. Hierbei kann in dem Berechtigungsprofil eine spezifische Zuordnung von Berechtigungen, Berechtigungsbeschränkungen und/oder oder Berechtigungsverboten zu speziellen Handwerkergeräten vorgenommen sein.

Gemäß einem exemplarischen Ausführungsbeispiel kann der Prozessor ausgebildet sein, bei Koppeln mit einem jeweiligen Handwerkergerät eine Benutzung des Handwerkergeräts durch den Benutzer basierend auf dem personalisierten Berechtigungsprofil zuzulassen, einzustellen und/oder zu unterbinden. Gemäß einem exemplarischen Ausführungsbeispiel der Erfindung kann ein Token ein damit mechanisch gekoppeltes Handwerkergerät in benutzerspezifischer bzw. benutzerbezogener Weise steuern. Beispielsweise ausgelöst durch das Ausbilden einer mechanischen Kopplung zwischen Token und Handwerkergerät kann dann eine Benutzung des Handwerkergeräts durch den Benutzer gewährt oder ein Zugriffsrecht verweigert werden bzw. kann die Art und weise der Benutzung in Übereinstimmung mit dem personalisierten Benutzerprofil reglementiert werden. Durch Zuweisung eines benutzerbezogenen Berechtigungsprofils zu einzelnen Handwerkergeräten einer Handwerkerausstattung kann selbst in komplexen Systemen mit einer großen Vielzahl von Handwerkergeräten, Token und Benutzern ein mittels eines insbesondere benutzerbezogenen Token schnell durchführbarer und fehlerrobuster Abgleich zwischen Benutzerprofilen und Handwerkergeräten vorgenommen werden und somit ein effizientes Zugriffsmanagement erreicht werden. Gleichzeitig kann ein hohes Maß an Betriebssicherheit erreicht werden, da selbst bei einer unübersichtlich großen Anzahl von Handwerkergeräten, Benutzern und Token die Verwaltung von Berechtigungen effizient ermöglicht ist.

Gemäß einem exemplarischen Ausführungsbeispiel kann der Token eine Identifizierungseinrichtung zum Identifizieren eines Benutzers des Tokens aufweisen. Im Rahmen der vorliegenden Anmeldung kann unter einer "Identifizierungseinrichtung zum Identifizieren eines Benutzers des Tokens" insbesondere eine Entität oder ein Funktionsblock des Token verstanden werden, die oder der Informationen zum Feststellen der Identität des Benutzers des Token liefert. Eine Identifizierungseinrichtung kann die Identifizierung eines Benutzers zum Beispiel unter Verwendung von für eine Benutzeridentität indikativen Sensordaten (wie zum Beispiel Sensordaten eines Fingerprintsensors) und/oder durch eine entsprechende Benutzereingabe (zum Beispiel Eingabe einer Benutzerkennung, optional in Kombination mit einem Kennwort) durchführen. Im Rahmen der Identifizierung eines Benutzers kann die Identifizierungseinrichtung insbesondere einen Abgleich zwischen ermittelten Sensordaten (zum Beispiel Fingerabdruck-Ist-Daten) und vorbestimmten Referenzdaten (zum Beispiel Fingerabdruck-Soll-Daten) durchführen.

Gemäß einem exemplarischen Ausführungsbeispiel kann der Prozessor ausgebildet sein, den Betrieb des mit dem Token gekoppelten Handwerkergeräts nur dann freizugeben, wenn eine mittels des Token vorab durchgeführte Benutzeridentifizierung zu dem Ergebnis geführt hat, dass ein sich identifizierender Benutzer für den Betrieb des Handwerkergeräts berechtigt ist. Gemäß einem exemplarischen Ausführungsbeispiel kann ein Betrieb des Handwerkergeräts ohne Kopplung mit dem Token unterbunden sein. Ohne positive Verifizierung einer Benutzerberechtigung eines Benutzers zur Benutzung eines bestimmten Handwerkergeräts kann die Benutzung des Handwerkergeräts deaktiviert sein. Wenn ein Benutzer ohne oder vor Verifizierung der Benutzungsberechtigung einen Betätigungsknopf einer Bohrmaschine betätigt, verunmöglicht der Prozessor des Token den Bohrbetrieb der Bohrmaschine. Die Notwendigkeit einer positiven Bestätigung der Benutzungsbefugnis eines Handwerkergeräts durch einen Benutzer erhöht die Betriebssicherheit und vermeidet Missbrauch.

Gemäß einem exemplarischen Ausführungsbeispiel können die Handwerkergeräte mindestens ein elektrisches oder motorisches Handgerät aufweisen. Dieses kann zum Beispiel aus einer Gruppe ausgebildet sein, die besteht aus einer Bohrmaschine, einem Akkuschrauber, einem Akku-Bohrschrauber, einem Drehschrauber, einem Impulsschrauber, einem Ratschenschrauber, einem Schlagschrauber, insbesondere einem Akku-Schlagschrauber, einem Hammerbohrer, einem kabelgebundenen Handgerät und einem druckluftbetriebenen Handgerät.

Gemäß einem exemplarischen Ausführungsbeispiel kann das Werkzeug als ein Werkzeug aus einer Gruppe ausgebildet sein, die besteht aus einem Hammer, einer Zange, einer Feile, einem Schraubendreher, einem Bohrer, einem Bit und einer Nuss für eine Ratsche. Ein Werkzeugsatz kann zum Beispiel ein Bithalter mit darin aufgenommenen Bits oder ein Bohrerhalter mit darin aufgenommenen Bohrern sein.

Gemäß einem exemplarischen Ausführungsbeispiel kann das Bevorratungssystem als ein Bevorratungssystem aus einer Gruppe ausgebildet sein, die besteht aus einem Koffer, einem Regal, einer Schublade, und einer Kiste.

Gemäß einem exemplarischen Ausführungsbeispiel kann das Verbrauchsgut als ein Verbrauchsgut aus einer Gruppe ausgebildet sein, die besteht aus einer Schraube, einem Dübel, einem Bolzenanker, einem Nagel, einem Niet, und einer Packung mit solchen Verbrauchsgütern.

Gemäß einem exemplarischen Ausführungsbeispiel kann das Fahrzeug als ein Fahrzeug aus einer Gruppe ausgebildet sein, die besteht aus einem motorisch (insbesondere elektrisch und/oder mittels eines Verbrennungsmotors) angetriebenen Fahrzeug und einem mit Muskelkraft angetriebenen Fahrzeug (zum Beispiel ein Werkzeugwagen).

Gemäß einem exemplarischen Ausführungsbeispiel können die Handwerkergeräte mindestens ein elektrisches Handgerät, mindestens ein Werkzeug und/oder mindestens eine Werkzeugsatz, mindestens ein Bevorratungssystem, mindestens ein Verbrauchsgut, und mindestens ein Fahrzeug aufweisen.

Im Folgenden werden exemplarische Ausführungsbeispiele der vorliegenden Erfindung mit Verweis auf die folgenden Figuren detailliert beschrieben.
Figur 1 zeigt eine Handwerkerausstattung mit Handwerkergeräten und Token gemäß einem exemplarischen Ausführungsbeispiel der Erfindung, die in einem Kommunikationsnetzwerk mit zusätzlichen kommunizierfähigen Knoten gekoppelt sind.
Figur 2 zeigt einen Token mit einer zugehörigen Aufbewahrungs- und wiederaufladevorrichtung gemäß einem exemplarischen Ausführungsbeispiel der Erfindung.
Figur 3 zeigt einen Token gemäß einem exemplarischen Ausführungsbeispiel der Erfindung,
Figur 4 zeigt Komponenten einer Handwerkerausstattung gemäß einem anderen exemplarischen Ausführungsbeispiel der Erfindung.
Figur 5 zeigt eine Handwerkerausstattung mit Handwerkergeräten und einem Token gemäß einem exemplarischen Ausführungsbeispiel der Erfindung, die in einem Kommunikationsnetzwerk gekoppelt sind.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte von Ausführungsbeispielen der Erfindung erläutert werden.

Gemäß einem exemplarischen Ausführungsbeispiel kann ein Token für eine Verwendung mit einem Handwerkergerät (zum Beispiel für eine Werkzeugmaschine) eingesetzt werden.

Hierbei kann der Token beispielsweise mit einem kombinierten elektrischen und mechanischen Aufbau bereitgestellt werden. Genauer gesagt können unterschiedliche Token einer Token-Anordnung einen gemeinsamen elektrischen und/oder mechanischen Grundaufbau haben, aber sich darüber hinaus hinsichtlich eines variablen elektrischen und/oder mechanischen Zusatzaufbaus unterscheiden. Als feste Konstituenten können unterschiedliche Token einer Token-Anordnung einen Prozessor (der zum Beispiel auch Nachverarbeitungs- und/oder Datenverdichtungs-Aufgaben ausführen kann), eine Kommunikationseinrichtung, und eine Kryptographieeinheit (insbesondere einen Decrypter) aufweisen. Ein variabler Anteil unterschiedlicher Token einer Token-Anordnung kann zum Beispiel Unterschiede hinsichtlich mindestens einer Sende-/ Empfangs-Einheit, mindestens einer Antenne und/oder mindestens eines Sensors aufweisen. Ein jeweiliger Token kann als Gegenstand ausgebildet sein, der eine Packaging-Komponente, eine oder mehrere Einschübe, eine Kompatibilität mit einer Batterie, und oder einen Leiteradapter aufweisen kann. Es ist auch möglich, dass ein Token mit elektrischem Strom von extern versorgt wird. Gemäß einem exemplarischen Ausführungsbeispiel kann ein Token-System eine (insbesondere indirekte) Steuerung eines Handwerkergerätes unter Einsatz eines Berechtigungskonzepts ausführen, insbesondere unter Einsatz eines personalisierten Berechtigungskonzepts.

Token einer Token-Anordnung können unterschiedliche Grade an Funktionalität aufweisen, und daher unterschiedlichen Generationen zugeordnet werden. Beispielsweise kann ein Token eines ersten Grads an Funktionalität prozessortechnisch bzw. kommunikativ als BLE-fähiger Token mit beschränkter Sensorik (beispielsweise lediglich mit einem Temperatur- und einem VibrationsSensor) ausgestattet sein. Mit einem solchen Token können beispielsweise Datenblätter von einem zentralen Knoten eines Kommunikationsnetzwerks heruntergeladen werden. Die Durchführung einer Bearbeitungsaufgabe mittels eines einem Token zugeordneten Handwerkergeräts kann beispielsweise von einer aktuellen Umgebungstemperatur abhängig gemacht werden. Beispielsweise kann das Setzen eines chemischen Dübels nur zugelassen werden, wenn eine minimale Verarbeitungstemperatur sichergestellt ist. Ein Token zweiter Generation kann zum Beispiel prozessortechnisch bzw. kommunikativ als Ultrabreitband-Token ausgebildet sein, der zusätzlich mit einem Gyrosensor ausgerüstet werden kann. Zum Beispiel kann ein solcher Gyrossensor erkennen, wenn ein Handgerät (beispielsweise eine Bohrmaschine) auf dem Boden fällt und kann das Handgerät dann automatisch abschalten. Ein Token dritter Generation kann wiederum zusätzlich mit einer NB IoT (Narrow Band Internet of Things) Funktionalität ausgerüstet werden und zusätzlich mit einem GPS-Sensor. Ein Token dritter Generation kann somit dazu in der Lage sein, eine Ortsbestimmung des Token und eines damit mechanisch gekoppelten Handwerkergeräts durchzuführen und eine Freigabe zum Betrieb des Handwerkergeräts nur zu erteilen, wenn der ermittelte Ort für den beabsichtigten Betrieb des Handwerkergeräts zugelassen ist. Beispielsweise kann die Inbetriebnahme eines Baggers nur freigegeben werden, wenn sich der Bagger auf einer bestimmten Baustelle befindet. Dadurch ist ein Missbrauchsschutz bereitgestellt.

Gemäß einem exemplarischen Ausführungsbeispiel der Erfindung bildet ein Token eine Basiseinheit eines Systems zum gesteuerten Betrieb von Handwerkergeräten. Ein solche Token kann einen festen Bestandteil (insbesondere mit Microcontroller, Decrypter) aufweisen, der in jedem Token einer Token-Anordnung enthalten sein kann. Ferner kann jeder Token einer Token-Anordnung eine elektromechanische Anbindung zu Handwerkergeräten ermöglichen (insbesondere einen oder mehrere elektrische Kontakte zum elektrischen Koppeln mit einem Handwerkergerät bereitstellen). Darüber hinaus können Token einer Token-Anordnung einen variablen Anteil aufweisen, der für unterschiedliche Token unterschiedlich sein kann. Ein solcher variabler Anteil kann die Ausstattung eines Token mit einem oder mehreren Sensoren (zum Beispiel Fingerprintsensor, Gyroskop, GPS-Sensor, UWB-Sensor, Temperatursensor), mindestens einem Funkchip (zum Beispiel konfiguriert gemäß Bluetooth Low Energy, Bluetooth, NB-IoT, LTE Cat. M, 5G, NFC) und/oder mindestens einer Antenne (zum Beispiel konfiguriert gemäß 2.5 GPS, BLE, UWB, NB-IoT) betreffen. Optional kann ein Token mit einer eigenen Stromversorgung ausgerüstet werden, beispielsweise einer Batterie oder einem Akku.

Ein oder mehrere Token mit den beschriebenen Eigenschaften kann oder können einen Teil eines Systems einer Handwerkerausstattung bilden, das zudem Handwerkergeräte (wie zum Beispiel Akku-Bohrer, Werkzeuge, Koffer, Regale, etc.) umfassen kann. Auch Software-Komponenten (zum Beispiel eine IoT Cloud-Software, eine App, etc.) können Teil eines solchen Systems sein.

Bevorzugt weist ein Token gemäß einem exemplarischen Ausführungsbeispiel der Erfindung eine mechanische Kopplungseinrichtung auf, die als elektromechanische Kopplung ausgebildet sein kann. Diese mechanische Kopplungseinrichtung kann an oder in elektromechanische Kupplungen von Handwerkergeräten (wie zum Beispiel Handgeräten, Werkzeugen, Koffern, Regale, etc.) gesteckt werden. Es ist auch möglich, eine mechanische Kopplungseinrichtung eines Token an oder in einem dafür vorgesehenen Gehäuse (zum Beispiel eines Trackers) oder an oder in weiteren Geräten (zum Beispiel eine Vorrichtung zum Befüllen entleerter Spraydosen und dergleichen) anzubringen.

Im Betrieb kann ein Token mit dem Handwerkergerät oder einer sonstigen Vorrichtung, in das bzw. die der Token gesteckt werden ist, kommunizieren. Auf diese Weise kann ein Token feststellen, an bzw. in welchem Gegenstand der Token steckt. Daher ist ein einheitlicher Bus für alle Gegenstände vorteilhaft, Dies stellt sicher, dass in einem komplexen System einer Handwerkerausstattung (beispielsweise ein Maschinenpark oder Handwerkerausrüstung eines Unternehmens) jeder Token mit jedem Handwerkergerät in mechanische und kommunikative Verbindung (insbesondere Steuer-Verbindung) gebracht werden kann. Allgemeiner ausgedrückt können alle Handwerkergeräte einer Handwerkerausstattung mit einer mechanisch identisch ausgebildeten mechanischen Verbindungseinrichtung ausgestattet sein, die alle eine wahlweise Kopplung mit demselben Token ermöglichen. Anders ausgedrückt kann der Token als Modul in all diese Gegenstände modulartig steckbar sein.

Gemäß einem exemplarischen Ausführungsbeispiel kann ein Token Dokumente und/oder Steuersignale zu dem Handwerkergerät (zum Beispiel einem Akkubohrer) übermitteln, in das der Token gesteckt wurde. Alternativ oder ergänzend ist es möglich, dass ein Token Dokumente betreffend ein mit einem Handgerät verbundenes Zusatzgerät (zum Beispiel ein Werkzeug, ein Adapter, etc.) runterlädt. Ein Token kann auch Dokumente betreffend ein mit einem Handwerkergerät zu verarbeitenden Werkstück (zum Beispiel ein Betonanker) runterladen und damit das Handwerkergerät entsprechend steuern (zum Beispiel Steuern einer Drehzahl zum Bohren und/oder Eindrehen eines Betonankers).

Bevorzugt kann ein Token Berechtigungen für ein Handwerkergerät (zum Beispiel ein Handgerät, Werkzeug, Koffer, Regal, etc.) runterladen, damit das Handwerkergerät nur in einem bestimmten räumlichen Bereich betrieben werden kann (zum Beispiel Bohrmaschinen nur auf einer Baustelle). Hierfür kann zum Beispiel ein GPS-Sensor in dem Token oder zugehörigen Handwerkergerät implementiert sein, der aktuelle Ortsinformation liefert.

Insbesondere kann ein Token gemäß einem exemplarischen Ausführungsbeispiel der Erfindung Berechtigungen für ein Handwerkergerät (zum Beispiel ein Handgerät, Werkzeug, Koffer, Regal, etc.) runterladen, damit das Handwerkergerät nur von bestimmten Personen benutzt oder betrieben werden kann (beispielsweise nur eingewiesenes Personal). Der Token kann insbesondere Berechtigungen für das Handwerkergerät runterladen, damit das Handwerkergerät nur mit bestimmter persönlicher Schutzausrüstung betrieben werden kann.

Ein Token kann ein mechanisch damit gekoppeltes Handwerkergerät steuern, zum Beispiel einen Staubsauger ein- bzw. ausschalten. Zum Beispiel kann der Token beim Einschalten einer Bohrmaschine auch ein Einschalten einer Bohrmehlabsaugung auslösen, sodass ein Benutzer zum Einschalten eines zugehörigen Staubsaugers keine weitere Hand benötigt.

Gemäß einem Ausführungsbeispiel kann ein Token mit einem optischen Sensor (beispielsweise einer Kamera oder einem Laserscanner) ausgestattet sein, um ein Produkt oder einen Körper (zum Beispiel eine Wand oder eine Schraube) zu identifizieren, der mit einem Handwerkergerät verarbeitet wird.

Es ist auch möglich, dass der Token von einem damit kommunizierfähig gekoppelten Knoten eines Kommunikationsnetzwerks Produktinformation zu dem Produkt herunterlädt. Dem Token oder einem damit mechanisch gekoppelten Handwerkergerät ist dann bekannt, wie das Produkt zu verarbeiten ist, beispielsweise welches Drehmoment aufzubringen ist.

Gemäß einem Ausführungsbeispiel der Erfindung werden unterschiedliche Typen von Handwerkergeräten (insbesondere elektrische Handgeräte wie zum Beispiel Schlagbohrmaschinen, Werkzeuge oder Werkzeugsätze wie Bohrer oder Bohrerboxen, Bevorratungssysteme wie zum Beispiel Regale, Verbrauchsgüter wie beispielsweise Schraubenpackungen und/oder Fahrzeuge wie etwa Gabelstapler) mit einem jeweiligen Token (der einen Prozessor aufweist) mechanisch gekoppelt. Der einem jeweiligen Handwerkergerät zugeordnete Token kann auch abnehmbar zwischen unterschiedlichen Handwerkergeräten ausgetauscht werden und ist daher universell einsetzbar. Mittels des Prozessors des Token können ganz unterschiedliche Funktionen bereitgestellt werden, wie zum Beispiel ein Steuern eines zugeordneten elektrischen Handgeräts, ein kommunizierfähiges Koppeln zwischen unterschiedlichen Handwerkergeräten mittels ihrer Token, ein kommunizierfähiges Koppeln eines Token eines Handwerkergeräts mit einem Kommunikationsknoten (zum Beispiel zum Upload und/oder Download von Daten, oder zum Auslösen einer Nachbestellung von Verbrauchsgütern), oder eine Ortung oder räumliche Nachverfolgung von Token samt zugeordnetem Handwerkergerät. Die beschriebene Architektur eignet sich besonders für ein diversifiziertes System vieler Handwerkergeräte einer Handwerkerausstattung und ermöglicht deren effiziente Verwaltung mit geringem Aufwand.

Beispielsweise kann mit dem beschriebenen System gemäß einem exemplarischen Ausführungsbeispiel der Erfindung ein Handwerker effizient bei der Erfüllung einer Handwerkeraufgabe unterstützt werden. Beispielsweise kann ein Handwerker vor der Aufgabe stehen, eine Betonschraube mittels eines Akku-Schraubers in einen Untergrund zu setzen. Hierfür kann zunächst unter Verwendung eines Token an dem Akku-Schrauber ein Benutzer identifiziert werden und überprüft werden, ob ein personalisiertes Berechtigungsprofil des identifizierten Benutzers die Verwendung des Akku-Schraubers durch diesen Benutzer erlaubt. Ist dies positiv verifiziert, kann zum Beispiel durch eine Kamera des Token, des Akku-Schraubers oder eines mit dem Token kommunizierfähig gekoppelten Mobilfunkgeräts die Art der verwendeten Schrauben oder eines anderen Verbrauchguts detektiert werden, beispielsweise M8 Schrauben. Zur Unterstützung des Benutzers beim Setzen des detektierten Verbrauchsguts kann dann mittels des Token des Akku-Schraubers aus einer Datenbank in einem Kommunikationsnetzwerk eine Spezifikation eines Satzvorgangs heruntergeladen und unter Verwendung des Akku-Schraubers abgearbeitet werden.

Gemäß einem exemplarischen Ausführungsbeispiel der Erfindung wird eine Handwerkerausstattung als Arbeitsumgebung eines Handwerkers mit mehreren Handwerkergeräten oder sonstigen Komponenten verwaltet, die beispielsweise elektrische Handgeräte, Werkzeuge, Koffer, Regale und dergleichen aufweisen können. Jede dieser Komponenten oder Handwerkergeräte kann eine elektromechanische Schnittstelle für einen Token aufweisen. In entsprechender Weise kann ein Token eine elektromechanische Schnittstelle zur Verbindung mit der elektromechanischen Schnittstelle der Handwerkergeräte oder sonstigen Komponenten aufweisen.

Beispielsweise kann der Token mit einem zugeordneten Handwerkergerät oder einer sonstigen Komponente kommunizieren, damit der Token weiß, in welchem Handwerkergerät er steckt. Beispielsweise kann der Token das zugeordnete Handwerkergerät oder die sonstige zugeordnete Komponente steuern. Es ist auch möglich, dass der Token Dokumente aus einem Kommunikationsnetzwerk (wie dem Internet oder einem Intranet) herunterlädt, beispielsweise als Basis für die Steuerung des ihm zugeordneten Handwerkergeräts oder der sonstigen Komponente. Mit Vorteil kann der Token modulartig austauschbar zwischen unterschiedlichen Handwerkergeräten oder Komponenten ausgebildet sein. Es ist auch möglich, dass der Token von dem ihm zugeordneten Handwerkergerät oder einer sonstigen Komponente gesteuert wird. Um ein drahtloses Kommunizieren zu ermöglichen, kann der Token mit einer Funk-Verbindung zum Internet oder zu einem Intranet ausgestattet werden (insbesondere mittels Bereitstellens einer WLAN-Antenne, SIM-Karte, etc.). Mit Vorteil kann der Token eine Kommunikationsverbindung zu einem oder mehreren Handwerkergeräten aufweisen, insbesondere über eine Funk- oder Leitungsverbindung. Bevorzugt kann der Token modulartig austauschbar in unterschiedlichen Handwerkergeräten angeordnet werden. Zu diesem Zweck kann der Token mit einer elektromechanischen Schnittstelle ausgerüstet werden, die für alle Token gleich ist und daher mit einer universellen elektromechanischen Schnittstelle jedes Handwerkergeräts flexibel gekoppelt werden kann.

Ein Token gemäß einem exemplarischen Ausführungsbeispiel der Erfindung kann über ein Kommunikationsnetzwerk Dokumente von einem kommunizierfähig gekoppelten Knoten runterladen und/oder Dokumente zu einem kommunizierfähig gekoppelten Knoten hochladen.

Gemäß einem bevorzugten Ausführungsbeispiel kann der Token Berechtigungen in einem Nutzersystem für Handwerkergeräte und dergleichen aus einer Cloud laden und bei Fehlen einer Berechtigung bzw. bei nur eingeschränkter Berechtigung für einen Benutzer ein Handwerkergerät für diesen Benutzer sperren oder eingeschränkt einstellen.

Ein Token kann gemäß exemplarischen Ausführungsbeispielen in verschiedenen Varianten mit unterschiedlichen Graden von Funktionalität vorgesehen werden. Ein Token einer ersten Generation kann beispielsweise nur eine Kommunikation gemäß Bluetooth unterstützen und hinsichtlich seiner Sensorik einen Temperatursensor und einen Vibrationssensor aufweisen. Ein Token einer zweiten Generation kann zusätzlich eine NB-IoT-Funktionalität aufweisen und hinsichtlich seiner Sensorik zusätzlich ein Gyroskop enthalten. Weitere Funktionalität eines Token ist möglich, beispielsweise ein GPS-Sensor, ein UWB-Modul, ein Fingerprintsensor, etc.

Zum Beispiel kann ein Token in Kommunikationsverbindung mit einer App stehen, die zum Beispiel auf einem Nutzerendgerät läuft. Dies kann zum Beispiel ermöglichen, ein eingesetztes Werkzeug (beispielsweise einen Bohrer) zu erkennen, beispielsweise mittels der Kamera des Nutzerendgeräts. In entsprechender Weise kann auch ein Werkstück oder Verbrauchsgut, beispielsweise ein Betonanker, erkannt werden. Basierend auf der erkannten Informationen können Werkzeug und Verbrauchsgut passend gesteuert und verarbeitet werden.

Bei Ausrüstung eines Token mit Kommunikationsfähigkeit kann dieser kommunizierfähig in Verbindung mit einem Gateway, mit anderem Token, etc. gebracht werden.

Ein Token gemäß einem exemplarischen Ausführungsbeispiel der Erfindung kann auch eine Diebstahlsicherung bereitstellen. Zu diesem Zweck kann der Token zum Beispiel mit einem Fingerprintsensor, einem Gesichtserkennungssensor oder dergleichen ausgerüstet werden, um einen Benutzer zu identifizieren. Nur einem berechtigten Benutzer kann Zugang zu der Benutzung des zugeordneten Handwerkergeräts gewährt werden. Beispielsweise kann eine Maschine nur mit entsprechend freigegebenem Token betrieben werden.

Eine Berechtigung für den Token kann auf dem Token gespeichert sein und/oder kann in einer Cloud gespeichert sein. Ein Token kann ein Berechtigungsprofil von einem Nutzer und für Maschinen für diesen Nutzer und für Werkzeuge für Maschinen runterladen. Ferner kann ein Token diese Berechtigungen nach jedem Runterladen lokal speichern, damit diese offline zur Verfügung stehen, Berechtigungen können alternativ oder zusätzlich in einer Maschine oder einem Akku gespeichert werden. In diesem Fall identifiziert sich der Benutzer dann an der Maschine und/oder dem Akku.

Berechtigungen können auch benutzerspezifische Daten umfassen. Ist beispielsweise eine Maschine zu schwer für einen Nutzer, kann diese Maschine für diesen Nutzer gesperrt werden.

Gemäß einem Ausführungsbeispiel kann ein Token in einen Tracker gesteckt werden. Der Tracker kann an einer Maschine befestigbar sein, beispielsweise durch Kleben, magnetisches Verbinden oder durch Verrasten. Der Token steckt dann in dem Tracker. Beispielsweise kann der Tracker eine Batterie und Antennen für RFID und/oder WLAN und/oder Bluetooth haben.

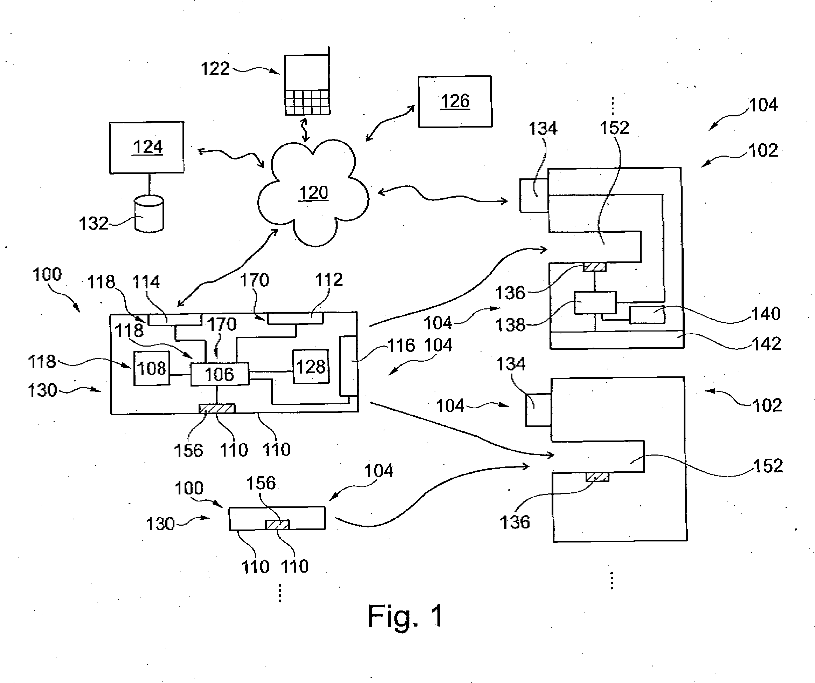

**Figur 1** zeigt eine Handwerkerausstattung 104, beispielsweise eine Werkstattausstattung oder ein Maschinenpark oder Handwerkerequipment eines Unternehmens, mit Handwerkergeräten 102 und Token 100 gemäß einem exemplarischen Ausführungsbeispiel der Erfindung, die in einem Kommunikationsnetzwerk 120 gekoppelt sind.

Genauer gesagt weist die Handwerkerausstattung 104 eine Vielzahl von Token 100 aus, die zum Beispiel alle in gleicher Weise geformt und dimensioniert sein können. In Figur 1 sind nur zwei solche Token 100 dargestellt, jedoch ist eine viel größere Anzahl von Token 100 in einer Handwerkerausstattung 104 möglich (zum Beispiel mindestens zehn, insbesondere mindestens hundert).

Darüber hinaus ist in der Handwerkerausstattung 104 eine Mehrzahl von Handwerkergeräten 102 vorgesehen. In Figur 1 sind nur zwei solche Handwerkergeräte 102 dargestellt, jedoch ist eine viel größere Anzahl von Handwerkergeräten 102 in einer Handwerkerausstattung 104 möglich (zum Beispiel mindestens zehn, insbesondere mindestens hundert). Ein Teil oder alle der Handwerkergeräte 102 können eine identisch geformte und dimensionierte mechanische Aufnahmeeinrichtung 152 aufweisen, hier ausgebildet als Einsteck- oder Aufnahmeöffnung, die zum mechanischen Koppeln mit einer jeweiligen mechanischen Kopplungseinrichtung 110 eines beliebigen, benutzerseitig ausgewählten der Token 100 ausgebildet ist. Zwischen jeder mechanischen Kopplungseinrichtung 110 jedes Token 100 und jeder mechanischen Aufnahmeeinrichtung 152 jedes Handwerkergeräts 102 kann durch Zusammenstecken eine formschlüssige Verbindung ausgebildet werden.

Wenn eine mechanische Verbindung zwischen einem Token 100 und einem ausgewählten Handwerkergerät 102 ausgebildet ist, indem die mechanische Kopplungseinrichtung 110 des Token 100 in die Aufnahmeeinrichtung 152 des ausgewählten Handwerkergeräts 102 eingesteckt wird, wird simultan eine Wirk- oder Kommunikationsverbindung zwischen Token 100 und Handwerkergerät 102 ausgebildet. Genauer gesagt wird in dem dargestellten Ausführungsbeispiel eine elektrische Verbindung zwischen einem oder mehreren elektrischen Kontakten 156 an einer Außenseite jedes Token 100 und einem oder mehreren elektrischen Gegenkontakten 136 an einer Innenseite jeder Aufnahmeeinrichtung 152 jedes Handwerkergeräts 102 ausgebildet. Das Ausbilden eines Formschlusses zwischen einem jeweiligen Token 100 und einer jeweiligen Aufnahmeeinrichtung 152 eines Handwerkergeräts 102 führt somit zum Ausbilden eines elektrischen Kontakts und somit einer elektrisch leitfähigen Verbindung zwischen dem Token 100 und diesem Handwerkergerät 102. Durch diese elektrische Verbindung ist auch eine elektrische Kommunikationsverbindung zwischen dem Token 100 und dem Handwerkergerät 102 ausgebildet, die insbesondere die Übermittlung elektrischer Signale (beispielsweise.Steuersignale) ermöglicht. Alternativ zu dieser kontaktbehafteten elektrischen Kopplung kann eine drahtlose bzw. kontaktlose Kommunikationsverbindung zwischen einem Token 100 und einem Handwerkergerät 102 ausgebildet werden, indem durch Einführen des Token 100 in die Aufnahmeeinrichtung 152 ein Transponder (zum Beispiel ein RFID-Tag, nicht gezeigt) des Token 100 in einen Lesbarkeitsabstand eines Transponder-Lesegeräts (zum Beispiel ein RFID-Lesegerät, nicht gezeigt) des Handwerkergeräts 102 gebracht wird (nicht dargestellt).

Vorteilhaft ist ein Token 100, wenn dieser durch Einführen in die Aufnahmeeinrichtung 152 eines Handwerkergeräts 102 in Kommunikationsverbindung mit dem Handwerkergerät 102 gebracht worden ist, zum Steuern von diesem Handwerkergerät 102 ausgebildet. Ein Betrieb des Handwerkergeräts 102 in einem Zustand ohne Kopplung mit dem Token 100 kann unterbunden sein. Anders ausgedrückt kann erst durch eine erfolgreiche Kopplung von Token 100 und Handwerkergerät 103 dessen Benutzung freigegeben werden.

Indem jeder Token 100 wahlweise mit jeder mechanischen Aufnahmeeinrichtung 152 eines ausgewählten Handwerkergeräts 102 gekoppelt werden kann, ist ein flexibel kombinierbares, modulares System zum Betrieb, zur Steuerung und/oder zum Verwalten von Handwerkergeräten 102 in einer komplexen Handwerkerausrüstung 100 geschaffen.

In Figur 1 sind die Handwerkergeräte 102 nur teilweise und nur schematisch dargestellt. Beispielsweise kann ein erster Teil der Handwerkergeräte 102 als elektrische oder motorische Handgeräte ausgebildet sein, zum Beispiel als elektrische Bohrmaschinen, elektrische Akkuschrauber, etc. Als elektrische oder motorische Handgeräte ausgebildete Handwerkergeräte 102 können zum Beispiel eine Funktionseinrichtung 134 aufweisen, welche die eigentliche Funktion des jeweiligen Handgeräts ausführt und mittels eines elektrischen oder motorischen Antriebs angetrieben werden kann. Bei einem als Bohrmaschine ausgebildeten Handwerkergerät 102 kann die Funktionseinrichtung 134 zum Beispiel ein Bohrfutter (insbesondere mit Bohrer) sein. Bei einem als Akku-Schrauber ausgebildeten Handwerkergerät 102 kann die Funktionseinrichtung 134 zum Beispiel eine Bitaufnahme (insbesondere mit Bit) sein. Ferner kann ein Handgerät eine Energieversorgungseinrichtung 142 aufweisen, zum Beispiel einen abnehmbaren und wiederaufladbaren Akku-Block. Eine solche Energieversorgungseinrichtung 142 kann im Betrieb die Funktionseinrichtung 134 mit elektrischer Antriebsenergie versorgen. Alternativ oder ergänzend kann die Energieversorgungseinrichtung 142 auch ein Token 100 mit elektrischer Energie versorgen, wenn dieser in der Aufnahmeeinrichtung 152 aufgenommen ist. Auch kann ein Handgerät eine Steuereinrichtung 138 aufweisen, die zum Steuern des Handgeräts (zum Beispiel, wenn ein Handgerät mit keinem Token 100 gekoppelt ist) und/oder zum Zusammenwirken mit einem Prozessor 106 eines gekoppelten Token 100 ausgebildet sein kann.

Ein zweiter Teil (nicht gezeigt) der Handwerkergeräte 102 kann als (insbesondere nichtelektrische oder nichtmotorische) Werkzeuge bzw. Werkzeugsätze ausgebildet sein, zum Beispiel als Schraubendreher, Bohrer oder Bohrerbox, Bit oder Bitbox, etc.

Ein dritter Teil (nicht gezeigt) der Handwerkergeräte 102 kann als Bevorratungssysteme zum Bevorraten von Handgeräten, Werkzeugen und Verbrauchsgut ausgebildet sein. Beispiele für solche Bevorratungssysteme sind Kästen, Koffer, Schubladen und/oder Regale zum Aufnehmen bzw. Bevorraten von Handgeräten, Werkzeug und/oder Verbrauchsgut.

Ein vierter Teil (nicht gezeigt) der Handwerkergeräte 102 kann als Verbrauchsgut ausgebildet sein, beispielsweise Kartons mit Schrauben oder Dübeln, oder als Bolzenanker.

Ein fünfter Teil (nicht gezeigt) der Handwerkergeräte 102 kann als motorisch angetriebene Fahrzeuge ausgebildet sein, zum Beispiel als PKWs oder LKWs, Gabelstapler und/oder als Bagger, wie sie beim Durchführen von Handwerksaufgaben zum Einsatz kommen. Auch mit Muskelkraft angetriebene nichtmotorische Fahrzeuge, wie ein schiebbarer Werkzeugwagen, können eingesetzt werden.

Ein sechster Teil (nicht gezeigt) der Handwerkergeräte 102 kann als sonstige Hilfsmittel und Gerätschaften der Handwerkerausstattung 104 ausgebildet sein, beispielsweise als Leitern, Gerüste, etc.

Ein Teil oder jeder der beschriebenen Handwerkergeräte 102 kann vorübergehend oder dauerhaft mit einem Token 100 ausgerüstet werden.

Vorteilhaft sind die Handwerkergeräte 102 zum Koppeln mit den Token 100 derart ausgebildet, dass eine Benutzung eines mit einem Token 100 gekoppelten Handwerkergeräts 102 durch einen Benutzer basierend auf einem personalisierten Berechtigungsprofil zugelassen, eingestellt und/oder unterbunden werden kann. Genauer gesagt kann einem Benutzer eines Token 100 ein Benutzerprofil zugewiesen sein, das Informationen in Hinblick auf eine Befähigung und Berechtigung dieses Benutzers zur Benutzung bestimmter Handwerkergeräte 102 beinhalten kann, aber auch Benutzungseinschränkungen und/oder Benutzungsverbote hinsichtlich bestimmter Handwerkergeräte 102 definieren kann. Ein solches Benutzerprofil kann in einer Speichereinrichtung 128 eines Token 100, in einer Speichereinrichtung 140 eines Handwerkergeräts 102 und/oder in einer Datenbank 132 eines mit dem Token 100 über ein Kommunikationsnetzwerk 120 kommunizierfähig gekoppelten Knoten (in dem dargestellten Ausführungsbeispiel eine zentrale Steuereinrichtung 124, alternativ ein anderer Knoten) gespeichert sein.

Im Weiteren wird exemplarisch der Aufbau des Token 100 näher beschrieben, der in Figur 1 im Detail dargestellt ist. Besagter Token 100 dient zum Beispiel zum benutzerbezogenen Steuern eines auswählbaren der Handwerkergeräte 102 der Handwerkerausstattung 104 und weist zu diesem Zweck einen Prozessor 106 auf. Zum Beispiel kann der Prozessor 106 im Inneren des Token 100 eingebettet sein und dadurch geschützt sein. Der Prozessor 106 kann zum Beispiel als Mikroprozessor ausgebildet sein. Es ist möglich, den Prozessor 106 als einen Teil einer Prozessoreinheit, als gesamte Prozessoreinheit oder als Mehrzahl von zusammenwirkenden Prozessoreinheiten auszubilden. Der Prozessor 106 des Token 100 dient zum steuerungstechnischen Zusammenwirken mit unterschiedlichen Handwerkergeräten 102 der Handwerkerausstattung 104, und wirkt insbesondere funktional mit einem ausgewählten Handwerkergerät 102 zusammen, in dessen Aufnahmeeinrichtung 152 der Token 100 eingeführt ist.

Ferner enthält der Token 100 eine Kryptographieeinheit 108, die ein kryptografisches Kommunizieren des Token 100 unterstützt. Genauer gesagt kann mittels der Kryptographieeinheit 108 eine Kommunikation des Token 100 mit einem Kommunikationspartnergerät in dem Kommunikationsnetzwerk 120 verschlüsselt erfolgen. Beispielsweise kann eine solche, von der Kryptographieeinheit 108 unterstützte verschlüsselte Kommunikation zwischen dem Token 100 einerseits und andererseits einer zentralen Steuereinrichtung 124, einem Benutzerendgerät 122 und/oder einer Nachbestelleinrichtung 126 erfolgen. Die verschlüsselte Kommunikation erhöht die Datensicherheit bei der Kommunikation über das Kommunikationsnetzwerk 120. Optional ist es auch möglich, mittels der Kryptographieeinheit 108 eine verschlüsselte Kommunikation zwischen dem Token 100 und einem mit diesem mechanisch gekoppelten Handwerkergerät 102 durchzuführen, beispielsweise bei der Übermittlung von Steuersignalen von dem Token 100 an ein als Handgerät ausgebildetes Handwerkergerät 102. Dies führt zu einer sicheren Steuerung eines jeweiligen Handwerkergeräts 102, da ein Hackerangriff oder eine unbefugte Steuerung von außen dadurch unterbunden werden kann.

Wie bereits angesprochen, weist der Token 100 die mechanische Kopplungseinrichtung 110 auf, die zum vorzugsweise formschlüssigen mechanischen Koppeln mit einer Aufnahmeeinrichtung 152 von einem jeweiligen von unterschiedlichen Handwerkergeräten 102 der Handwerkerausstattung 104 ausgebildet ist..Die mechanische Kopplungseinrichtung 110 des Token 100 ist durch dessen äußere Formgebung definiert, die invers zur inneren Formgebung einer Aufnahmeeinrichtung 152 eines jeweiligen Handwerkergeräts 102 gestaltet ist.

Mit Vorteil kann der Token 100 ausgebildet sein, bei mechanischem Koppeln der mechanischen Kopplungseinrichtung 110 mit einer Aufnahmeeinrichtung 152 eines ausgewählten Handwerkergeräts 102 mittels des Prozessors 106 (und optional der Kryptographieeinheit 108 unter Einsatz kryptografischer Kommunikation) den Betrieb des besagten Handwerkergeräts 102 zu steuern. Genauer gesagt kann der Prozessor 106 des Token 100 das Handwerkergerät 102 und insbesondere dessen Funktionseinrichtung 134 so steuern, dass die gewünschte Bearbeitungsaufgabe durch das Handwerkergerät 102 bestimmungsgemäß durchgeführt wird. Beispielsweise kann der Prozessor 106 des Token 100 vorgeben, welches Drehmoment von einem Bohrer eines als Bohrmaschine ausgebildeten Handwerkergeräts 102 auf einen Untergrund aufgebracht wird, in dem ein Bohrloch gebohrt werden soll.

Mit Vorteil kann der Token 100 zum benutzerbezogenen Steuern des Handwerkergeräts 102 ausgebildet sein, insbesondere auf Basis eines personalisierten Berechtigungsprofils des Benutzers. Zu diesem Zweck kann der Token 100 mit einer Identifizierungseinrichtung 170 versehen sein, die zum Identifizieren eines Benutzers des Token 100 ausgebildet ist. Die Identifizierungseinrichtung 170 ist durch einen zum Beispiel als Fingerprintsensor ausgebildeten Sensor 112 und den Teil des Prozessors 106 gebildet, der aus mittels des Sensors 112 ermittelten Sensordaten den Benutzer identifiziert, beispielsweise durch einen Musterabgleich mit Referenzdaten. Genauer gesagt ist der Sensor 112 zum Beispiel als Fingerprintsensor ausgebildet, auf den ein Benutzer zum Identifizieren einen Finger auflegt. Vorteilhaft kann der Sensor 112 daher in einem Oberflächenbereich des Token 100 angebracht sein. Der Sensor 112 kann dann ermitteln, ob die von dem Sensor 112 erfassten Daten anzeigen, dass es sich bei dem Benutzer um einen berechtigten oder autorisierten Benutzer handelt bzw. um welchen Benutzer es sich handelt. Diese Ermittlung kann durch Vergleich der sensorisch erfassten Daten mit Sensor-Referenzdaten (zum Beispiel einem in einer Datenbank hinterlegten Fingerabdruck eines autorisierten Benutzers) durchgeführt werden.

Die bereits angesprochene Speichereinrichtung 128 des Token 100 kann Informationen speichern, die für ein personalisiertes Berechtigungsprofil des Benutzers in Bezug auf das Handwerkergerät 102 indikativ sind oder einen Zugang hierzu gewähren. Genauer ausgedrückt kann in der Speichereinrichtung 128 des Token 100 ein Datensatz gespeichert sein, der ein Berechtigungsprofil eines Benutzers (oder mehrere Berechtigungsprofile mehrerer Benutzer) darstellt oder abbildet. Es ist allerdings auch möglich, dass das Berechtigungsprofil von einem oder mehreren Benutzern in einer in Bezug auf den Token 100 entfernt angeordneten Entität gespeichert ist, zum Beispiel in einer zentralen Datenbank 132 einer zentralen Steuereinrichtung 124, über die der Token 100 mittels des Kommunikationsnetzwerks 120 kommunizierfähig gekoppelt sein kann. Zum Zugriff auf ein Berechtigungsprofil eines Benutzers kann es dann ausreichend sein, in dem Token 100 Zugriffsinformationen (zum Beispiel einen Link auf die zentrale Datenbank 132, gegebenenfalls in Kombination mit einem Passwort) zum Zugriff auf das entfernt gespeicherte Berechtigungsprofil zu speichern.

Der Prozessor 106 kann ausgebildet sein, den Betrieb des mit dem Token 100 gekoppelten Handwerkergeräts 102 in Einklang mit dem Benutzerberechtigungsprofil des Benutzers des Token 100 zu steuern. Insbesondere kann der Prozessor 106 ausgebildet sein, den Betrieb des mit dem Token 100 gekoppelten Handwerkergeräts 102 nur dann freizugeben, wenn eine mittels des Token 100 vorab durchgeführte Benutzeridentifizierung zu dem Ergebnis geführt hat, dass ein sich identifizierender Benutzer zum Betrieb des Handwerkergeräts 102 autorisiert ist. Mit Vorteil kann der Prozessor 106 des Token 100 also ausgebildet sein, bei Koppeln mit dem Handwerkergerät 102 eine Benutzung des Handwerkergeräts 102 durch den Benutzer basierend auf dem personalisierten Berechtigungsprofil zuzulassen, einzustellen und/oder zu unterbinden. Beispielsweise kann eine von einem Benutzer gewünschte Bearbeitungsaufgabe unter Verwendung eines Handwerkergeräts 102 nur für bestimmte Benutzer zugelassen sein, zum Beispiel wenn der Benutzer eine bestimmte Einweisung erhalten hat oder eine besondere Qualifizierung (zum Beispiel einen Führerschein) zur Benutzung des Handwerkergeräts 102 erhalten hat. Erfüllt das Berechtigungsprofil des Benutzers eine solche Bedingung nicht, kann die Benutzung des Handwerkergeräts 102 durch den Prozessor 106 des Token 100unterbunden werden. Erfüllt indes das Berechtigungsprofil des Benutzers eine solche Bedingung, kann die Benutzung des Handwerkergeräts 102 durch den Prozessor 106 des Token 100 zugelassen werden. Sind aufgrund eines Berechtigungsprofils bestimmte Bearbeitungsaufgaben für einen Benutzer nur eingeschränkt zugelassen, wird die Benutzung des Handwerkergeräts 102 durch den Benutzer nur zugelassen, wenn eine zugehörige Bedingung erfüllt ist. Beispielsweise kann die Benutzung eines Handwerkergeräts 102 durch einen Benutzer nur dann zugelassen sein, wenn dieser eine Schutzausrüstung (zum Beispiel eine Schutzbrille) trägt. Ist eine solche Schutzausrüstung ebenfalls mit einem Token 100 ersehen, kann der Prozessor 106 nach einem kommunizierfähig gekoppelten und eine Schutzausrüstung anzeigenden Token 100 suchen, und die gewünschte Bearbeitungsaufgabe durch einen Benutzer erst dann zulassen, wenn die Anwesenheit einer Schutzausrüstung durch die Anwesenheit einen solchen Token 100 erkannt worden ist.

Wie in Figur 1 dargestellt, kann die Handwerkerausstattung 104 eine Token-Anordnung 130 aus einer Mehrzahl von Token 100 aufweisen, wobei unterschiedliche der Token 100 unterschiedliche Grade an Funktionalität aufweisen. Beispielsweise können die Token 100 einer Handwerkerausstattung 104 in Token 100 einer ersten, zweiten und dritten Generation unterteilt werden. Jeder Token 100 einer beliebigen Generation kann dabei die Grundfunktion eines Token 100 erfüllen, wie oben beschrieben. Token 100 höherer Generationen können darüber hinaus Zusatzfunktionen und/oder Zusatzkomfort aufweisen, unterstützen aber auch die Grundfunktion eines Token 100 der niedrigsten Generation. Token 100 aller Generationen können die gleiche Form haben und können zum Einsatz mit beliebigen Handwerkergeräten 102 der Handwerkerausstattung 104 verwendet werden. Anders ausgedrückt ist die Token-Anordnung 130 hinsichtlich unterschiedlicher Generationen von Token 100 kompatibel. Die Handwerkergeräte 102 bedürfen keiner Anpassung in Hinblick auf ihr Zusammenwirken mit einem Token 100 einer jeweiligen Generation, außer dass eine Aufnahmeeinrichtung 152 zum mechanischen Aufnehmen eines zugehörigen Token 100 vorgesehen wird.

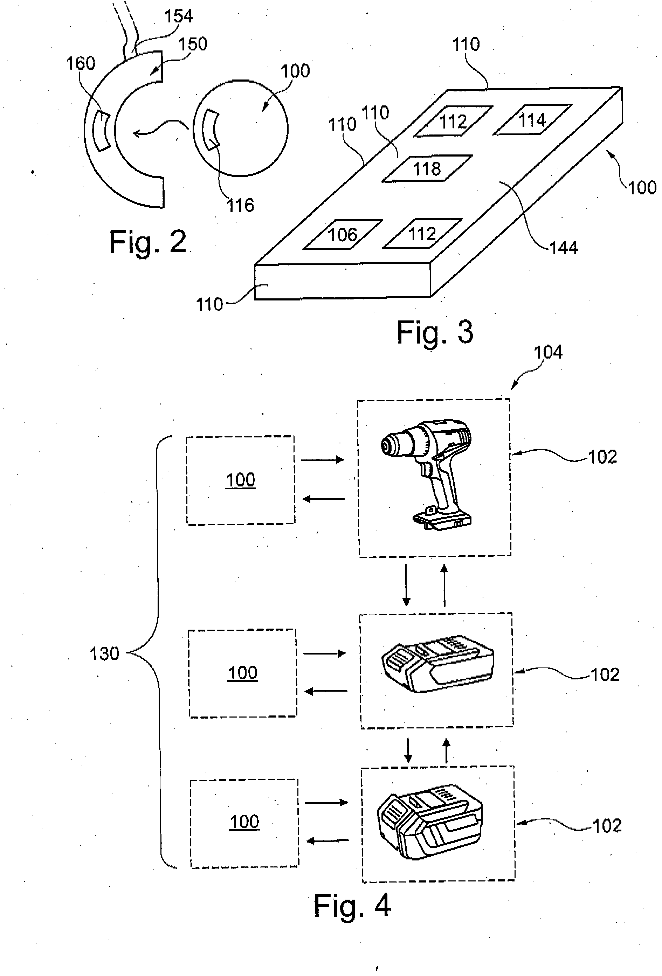

Jeder der eingesetzten Token 100 kann zum Beispiel als Steckelement zum Einstecken in eine Aufnahmeöffnung eines Handwerkergeräts 102 ausgebildet sein. Zum Beispiel kann jeder Token 100 als Kreisscheibe mit einem Durchmesser in einem Bereich von 2 cm bis 4 cm ausgebildet sein und ist daher von einem Benutzer bequem handhabbar und platzsparend in ein Handwerkergerät 102 einführbar. Andere Formen eines Token 100 sind möglich, siehe zum Beispiel Figur 3. Ferner ist die mechanische Kopplungseinrichtung 110 jedes Token 100 ausgebildet, den Token 100 mit dem Handwerkergerät 102 abnehmbar zu koppeln. Somit kann ein Benutzer einen (ihm beispielsweise zugeordneten) Token 100 nacheinander in Kombination mit unterschiedlichen Handwerkergeräten 102 einsetzen, wobei die Auswahl eines adressierten Handwerkergeräts 102 durch bloßes mechanisches Einführen der mechanischen Kopplungseinrichtung 110 des Token 100 in eine zugehörige Aufnahmeeinrichtung 152 eines Ziel-Handwerkergeräts 102 erfolgen kann. Somit dient die mechanische Kopplungseinrichtung 110 eines Token 100 als für unterschiedliche Handwerkergeräte 102 universelle elektromechanische Schnittstelle.

Wie bereits angesprochen, kann der Token 100 einen oder mehrere Sensoren 112 aufweisen, unter anderem den oben beschriebenen Benutzeridentifizierungssensor. Es ist alternativ oder ergänzend möglich, den Token 100 zum Beispiel mit einem Gyrosensor, einem Ortsbestimmungssensor und/oder einem Temperatursensor auszurüsten. Ein Gyrosensor kann etwa erkennen, wenn ein Handwerkergerät 102 mit darin aufgenommenen Token 100 herunterfällt und folglich einer Erschütterung ausgesetzt ist. Das Handwerkergerät 102 kann in diesem Fall vorsorglich ausgeschaltet werden, um Verletzungen eines Benutzers und Beschädigungen zu vermeiden. Ein Ortsbestimmungssensor (zum Beispiel ein GPS-Sensor) des Token 100 erlaubt die Erkennung einer aktuellen Position des Token 100 samt Handwerkergerät 102. Die Verwendung eines Handwerkergeräts 102 kann (zum Beispiel in einem Benutzerprofil) auf einen bestimmten Raumbereich (beispielsweise eine bestimmte Baustelle), eingeschränkt sein, zum Beispiel um Missbrauch zu vermeiden. Erkennt ein Ortsbestimmungssensor, dass sich ein Handwerkergerät 102 samt Token 100 an einem zur Verwendung nicht zugelassenen Ort befindet, kann der Prozessor 106 des Token 100 das Handwerkergerät 102 zur Vermeidung von Missbrauch ausschalten oder deaktivieren. Ein Temperatursensor des Token 100 kann die Umgebungstemperatur erfassen. Ist eine Bearbeitungsaufgabe (zum Beispiel das Setzen eines chemischen Dübels) nur unter bestimmten Temperaturbedingungen erlaubt, kann aus Sicherheitsgründen ein Betrieb des Handwerkergeräts 102 verunmöglicht werden, wenn eine Temperaturbedingung angesichts erfasster Temperatursensordaten nicht erfüllt ist.

Optional weist der Token 100 eine Energieversorgungseinrichtung 116 auf, zum Beispiel eine auswechselbare Batterie oder einen wiederaufladbaren Akku. Dann kann der Token 100 autonom betrieben werden. Alternativ oder ergänzend kann der Token 100 von einer Energieversorgungseinrichtung 142 eines Handwerkergeräts 102 mit elektrischer Energie versorgt werden, wenn der Token 100 in der Aufnahmeeinrichtung 152 aufgenommen ist.

Figur 1 zeigt weiter, dass der Token 100 eine Kommunikationsantenne 114 aufweisen kann, beispielsweise eine WLAN-Antenne. Es ist auch möglich und aus Gründen der Diversität vorteilhaft, wenn das Token 100 mehrere Kommunikationsantennen 114 aufweist, die zum Beispiel unterschiedliche Kommunikationsprotokolle unterstützen. Beispielsweise kann eine Kommunikationsantenne 114 in Form einer ebenen Spule realisiert sein, die vorzugsweise in einem Oberflächenbereich des Token 100 angeordnet ist. Eine Kommunikationsantenne 114 kann als Sende-/Empfangs-Antenne ausgebildet sein. Es ist auch möglich, eine Sendeantenne und eine separate Empfangsantenne vorzusehen, oder nur eine dieser Antennen.

Zudem weist der in Figur 1 dargestellte Token 100 eine Kommunikationseinrichtung 118 auf, die durch ein Zusammenwirken der Kommunikationsantenne 114 mit einem entsprechenden Teil des Prozessors 106 und optional mit der Kryptographieeinheit 108 gebildet sein kann. Die Kommunikationseinrichtung 118 dient zum Kommunizieren des Token 100 mit einem oder mehreren Kommunikationsknoten über das Kommunikationsnetzwerk 120. Dieses kann zum Beispiel das öffentliche Internet, ein Intranet oder ein Mobilfunknetzwerk sein.

Zum Beispiel kann der Token 100 über das Kommunikationsnetzwerk 120 - oder direkt - mit einem anderen Token 100 der Handwerkerausstattung 104 kommunizieren. Dies kann zum Beispiel zu dem Zweck erfolgen, die Anwesenheit einer mit einem Token 100 ausgerüsteten Schutzausrüstung zu erkennen (was aus Gründen der Arbeitssicherheit zur Bedingung für die Freigabe zur Benutzung eines Handwerkergeräts 102 gemacht werden kann).

Alternativ oder ergänzend ist es möglich, über das Kommunikationsnetzwerk 120 eine kommunizierfähige Kopplung zwischen dem Token 100 und einer auf einem portablen Benutzerendgerät 122 gespeicherten App oder sonstigen Software auszubilden. Im dargestellten Ausführungsbeispiel ist das Benutzerendgerät 122 ein Mobilfunkgerät mit einer Benutzeroberfläche, mit welcher ein Benutzer den kommunizierfähig gekoppelten Token 100 und/oder ein damit gekoppeltes Handwerkergerät 102 steuern und/oder überwachen kann. Mittels des Benutzerendgeräts 122 kann ein Benutzer auch von entfernter Position aus die Handwerkerausstattung 104 steuern und/oder überwachen. Beispielsweise kann sich ein Token 100 über eine App mit dem hier als Mobilfunkgerät ausgebildeten Benutzerendgerät 122 verbinden. Mittels des Benutzerendgeräts 122 können Daten auf den Token 100 heruntergeladen werden, beispielsweise ein Benutzerprofil eines Benutzers des Benutzerendgeräts 122. Ferner ist es möglich, dass der Token 100 im Betrieb auf Ressourcen des Benutzerendgerät 122 zugreift, beispielsweise auf einen darin enthaltenen Prozessor und/oder auf eine Kamera des Benutzerendgeräts 122.

Beispielsweise kann eine in dem Benutzerendgerät 122 enthaltene Kamera verwendet werden, um ein Bild von einer Produktverpackung aufzunehmen, das einen Rückschluss auf ein für eine Bearbeitungsaufgabe verwendetes Verbrauchsmaterial (zum Beispiel eine Schraubenart) ermöglicht. Diese Information kann von dem Benutzerendgerät 122 zu dem Token 100 übermittelt werden, sodass die Steuerung eines Beispiel als Akku-Schrauber ausgebildeten Handwerkergeräts 102 zum Setzen einer entsprechenden Schraube durch den Token 100 entsprechend durchgeführt werden kann. Allgemeiner ausgedrückt kann zum Beispiel an dem Token 100 und/oder an dem Benutzerendgerät 122 eine optische Detektionseinrichtung, insbesondere eine Kamera, vorgesehen sein, die zum Detektieren einer für eine mittels des Handwerkergeräts 102 auszuführenden Bearbeitungsaufgabe indikativen Bearbeitungsinformation ausgebildet ist. Vorteilhaft kann der Prozessor 106 zum Ausführen der Bearbeitungsaufgabe unter Verwendung der detektierten Bearbeitungsinformation ausgebildet sein.

Alternativ oder ergänzend ist es möglich, über das Kommunikationsnetzwerk 120 eine kommunizierfähige Kopplung zwischen dem Token 100 und einer zentralen Steuereinrichtung 124 (zum Beispiel zum Steuern mehrerer Handwerkergeräte 102) auszubilden. Die zentrale Steuereinrichtung 124 kann mit einem Zugriffsrecht auf eine Datenbank 132 ausgestattet sein, aus der Datensätze an den Token 100 übermittelt werden können. Solche Datensätze können zum Beispiel ein von dem Token 100 angefordertes Benutzerprofil, ein Betriebsdatensatz zum Ausführen einer Bearbeitungsaufgabe mit einem mit dem Token 100 mechanisch gekoppelten Handwerkergerät 102, etc. Somit kann der Token 100 ausgebildet sein, mittels der Kommunikationseinrichtung 118 von der zentralen Steuereinrichtung 124 oder einem anderen kommunizierfähig gekoppelten Knoten des Kommunikationsnetzwerks 120 einen Datensatz herunterzuladen, insbesondere einen einen Betriebsablauf des Handwerkergeräts 102 definierenden Datensatz und/oder einen ein Benutzerprofil eines Benutzers des Token 100 definierenden Datensatz.

Ferner ist es möglich, durch die kommunizierfähige Kopplung zwischen dem Token 100 und der zentralen Steuereinrichtung 124 Daten von dem Token 100 an die Steuereinrichtung 124 zum Speichern in der Datenbank 132 zu übermitteln. Solche Daten können zum Beispiel Tracking-Daten sein, die ein Nachverfolgen eines mit einem jeweiligen Token 100 gekoppelten Handwerkergeräts 102 erlauben. Somit kann der Token 100 ausgebildet sein, mittels der Kommunikationseinrichtung 118 zu der Steuereinrichtung 124 oder einem anderen kommunizierfähig gekoppelten Knoten des Kommunikationsnetzwerks 120 einen Datensatz heraufzuladen, insbesondere einen Betriebsergebnisse und/oder Betriebsparameter eines Betriebs des Handwerkergeräts 102 enthaltenden Datensatz.

Schließlich ist es möglich, dass der Token 100 über das Kommunikationsnetzwerk 120 mit einer Nachbestelleinrichtung 126 zum Nachbestellen von Verbrauchsgütern zum Betrieb eines Handwerkergeräts 102 gekoppelt ist. Erkennt ein Token 100 (beispielsweise mittels eines Tokeneigenen, beispielsweise optischen, Sensors 112 und/oder mittels eines Kamerabilds des Benutzerendgeräts 122), dass ein Restbestand eines bestimmten Verbrauchsguts (zum Beispiel einer bestimmten Art von Schrauben zum Setzen in einen Untergrund mittels eines als Akkuschrauber ausgebildeten Handwerkergeräts 102, in das der Token 100 eingeführt ist) unter einen kritischen Schwellwert abgesunken ist, kann der Token 100 über das Kommunikationsnetzwerk 120 die Nachbestelleinrichtung 126 entsprechend informieren und dadurch eine Nachbestellung dieses Verbrauchsguts auslösen bzw. triggern. Die Nachbestelleinrichtung 126 kann ein Computer sein, der seinerseits über das Kommunikationsnetzwerk 120 mit Lieferanten-Knoten gekoppelt sein kann, um die Nachbestellung auszuführen. Ein Nachbestellen von Verbrauchsgütern kann also von einem Token 100 ausgelöst werden, zum Beispiel wenn mittels des Token 100 und/oder eines Handwerkergeräts 102 zum Beispiel sensorisch erfasst worden ist, dass ein Restbestand von bestimmten Verbrauchsgütern unter einen vorgegebenen Schwellwert abgesunken ist.

Im Betrieb der Handwerkerausstattung 100 kann zum benutzerbezogenen Steuern eines Handwerkergeräts 102 mittels eines Token 100 zunächst ein Identifizieren eines Benutzers des Token 100 mittels des als Fingerprintsensor ausgebildeten Sensors 112 erfolgen. Danach kann ein mechanisches Koppeln der mechanischen Kopplungseinrichtung 110 des Token 100 mit der mechanischen Verbindungseinrichtung 152 des ausgewählten Handwerkergeräts 102 erfolgen. Vor oder nach dem mechanischen Koppeln kann ein personalisiertes Berechtigungsprofil des Benutzers des Token 100 aufgefunden werden, beispielsweise in einer der Speichereinrichtungen 128, 140. Nach erfolgtem mechanischen Koppeln kann ein Steuern des Handwerkergeräts 102 mittels des Prozessors 106 durchgeführt werden. Hierbei kann mit Vorteil eine Benutzung des Handwerkergeräts 102 durch den Benutzer basierend auf dem personalisierten Berechtigungsprofil zugelassen, unterbunden und/oder eingestellt werden. Insbesondere kann der Prozessor 106 ausgebildet sein, den Betrieb des mit dem Token 100 gekoppelten Handwerkergeräts 102 nur dann freizugeben, wenn eine mittels des Token 100 vorab durchgeführte Benutzeridentifizierung zu dem Ergebnis geführt hat, dass ein sich identifizierender Benutzer für den Betrieb des Handwerkergeräts 102 berechtigt ist. Hierbei kann das personalisierte Berechtigungsprofil zumindest eine Information aus einer Gruppe aufweisen, die besteht aus einem auf eine Benutzerqualifikation und/oder auf ein körperliches (zum Beispiel eine körperliche Einschränkung) oder biologisches (zum Beispiel ein fortgeschrittenes Alter) Benutzermerkmal bezogenes Benutzungsverbot für mindestens einen definierten Betriebsmodus des Handwerkergeräts 102, einer benutzerspezifischen Benutzungserlaubnis für mindestens einen definierten Betriebsmodus des Handwerkergeräts 102, und einer zum Beispiel arbeitsschutzbezogenen Benutzungsbedingung für die Benutzung des Handwerkergeräts 102. Beispielsweise kann das Berechtigungsprofil für einen bestimmten Benutzer die Information beinhalten, dass der Benutzer aufgrund seiner körperlichen Konstitution (beispielsweise aufgrund seines Lebensalters, seiner Größe und/oder seines Gewichts) nur zur Verwendung von Handwerkergeräten 102 bis zu einem bestimmten Gewicht (beispielsweise bis zu 20 kg) befähigt ist. Ferner kann in einem solchen Berechtigungsprofil für einen bestimmten Benutzer hinterlegt sein, für welche Handwerkergeräte 102 der Benutzer betriebsberechtigt ist (zum Beispiel kann die Benutzung eines Gabelstaplers einem Benutzer nur erlaubt werden, wenn dieser einen Gabelstapler-Führerschein hat). Ferner kann für einen bestimmten Benutzer und/oder für ein bestimmtes Handwerkergerät 102 in einem Benutzerprofil hinterlegt werden, welche Arbeitsschutzausrüstung (zum Beispiel Arbeitsschutzkittel, Ohrenschützer, Schutzbrille) von einem Benutzer zu tragen ist, um ein bestimmtes Handwerkergerät 102 benutzen zu dürfen. Die Verwendung eines Handwerkergeräts 102 kann einem Benutzer von dem Token 100 so lange verweigert werden, bis die Arbeitsschutzausrüstung an diesem Benutzer (beispielsweise sensorisch) erkannt worden ist. Beispielsweise kann auch die Arbeitsschutzausrüstung mit einem entsprechenden Token 100 ausgestattet sein, sodass durch Token-Token-Kommunikation das Vorliegen von Arbeitsschutzausrüstung an dem Benutzer nachgewiesen werden kann.

Der Prozessor 106 kann ausgebildet sein, bei Koppeln mit dem Handwerkergerät 102 basierend auf dem personalisierten Berechtigungsprofil ein Herunterladen eines Datensatzes (zum Beispiel ein Datenblatt), insbesondere eines einen Betriebsablauf des Handwerkergeräts 102 definierenden Datensatzes, aus einem Kommunikationsnetzwerk 120 zuzulassen oder zu unterbinden. Beispielsweise kann ein optischer Sensor (insbesondere eine Kamera) des Token 100 und/oder an einem Handwerkergerät 102 eine Produktpackung mit Schrauben scannen, die in einer Betriebsart des Handwerkergeräts 102 in einem Untergrund (beispielsweise einer vertikalen Betonwand) gesetzt werden soll. Auf diese Weise kann zum Beispiel sensorisch erkannt werden, dass es sich bei den Schrauben um M8 Schrauben handelt. Der Token 100 kann dann einen Download einer Produktspezifikation (als einen Betriebsablauf definierender Datensatz) entsprechend der sensorisch erfassten Produktpackung durchführen oder initiieren. Auf Basis des heruntergeladenen Datensatzes kann dann die Ausführung der Bearbeitungsaufgabe fehlerfrei erfolgen, und zwar durch eine Steuerung des Handwerkergeräts 102 durch den Token 100 unter Verwendung des heruntergeladenen Datensatzes.

**Figur 2** zeigt einen Token 100 mit einer zugehörigen Aufbewahrungs- und Wiederaufladevorrichtung gemäß einem exemplarischen Ausführungsbeispiel der Erfindung.

Genauer gesagt weist die in Figur 2 dargestellte Token-Anordnung den Token 100 und eine Token-Aufnahme 150 auf, die zum formschlüssigen und/oder kraftschlüssigen Aufnehmen des Token 100 ausgebildet sein kann. Hierfür kann der Token 100 in einen Aufnahmeraum der Token-Aufnahme 150 eingeklemmt werden, der zwischen einander gegenüberliegenden elastischen Schenkeln der Token-Aufnahme 150 begrenzt ist. Auf diese Weise kann ein Benutzer den Token 100 mechanisch geschützt verwahren, zum Beispiel unter Verwendung eines Verbindungselements 154. Mittels des Verbindungselements 154 kann ein Benutzer die Token-Aufnahme 150, optional samt darin aufgenommenem Token 100, in fixierter Weise mit sich führen, beispielsweise an einer Gürtelschlaufe befestigen.

Es ist auch möglich, einen Token 100 mit ganz oder teilweise entleerter Energieversorgungseinrichtung 116 (beispielsweise einem wiederaufladbaren Akku) an der Token-Aufnahme 150 anzubringen und dadurch ein Wiederaufladen der Energieversorgungseinrichtung 116 auszulösen. Hierfür kann (zum Beispiel durch einen elektrischen Kontakt oder in induktiver Weise) elektrische Energie von einer Ladeeinrichtung 160 der Token-Aufnahme 150 in die Energieversorgungseinrichtung 116 des Token 100 transferiert werden.

**Figur 3** zeigt einen Token 100 gemäß einem exemplarischen Ausführungsbeispiel der Erfindung. Der Token 100 gemäß Figur 3 ist als rechteckförmiger Streifen ausgebildet, der intuitiv in eine invers geformte Aussparung im Inneren eines Handwerkergeräts 102 eingeführt werden kann.

**Figur 4** zeigt Komponenten einer Handwerkerausstattung 104 gemäß einem anderen exemplarischen Ausführungsbeispiel der Erfindung.

Die Handwerkerausstattung 104 gemäß Figur 4 enthält zum Beispiel drei Handwerkergeräte 102 und beispielsweise drei Token 100.

Die drei Handwerkergeräte 102 gemäß Figur 4 sind als Bohrmaschine (oben), Sensormodul (Mitte) und Batterie-Block (unten) ausgebildet und miteinander verbindbar. Im Betrieb versorgt der Batterie-Block die Bohrmaschine mit elektrischer Energie, während das Sensormodul Betriebsdaten der Bohrmaschine sensorisch erkennt (und diese beispielsweise als Basis für eine Steuerung verwendet). Zwischen Bohrmaschine und Sensormodul ist jeweils eine bidirektionale Signalkopplung (d.h. in Senderichtung und in Empfangsrichtung) ermöglicht, siehe die beiden Pfeile. In entsprechender Weise ist zwischen Sensormodul und Batterie-Block eine bidirektionale Signalkopplung ermöglicht.

Zwischen jedem der Handwerkergeräte 102 und einem jeweiligen der Token 100 ist ebenfalls eine bidirektionale Signalkopplung ermöglicht. Die Konfiguration gemäß Figur 4 zeigt, dass alle Komponenten 102, 100 gleichberechtigt miteinander kommunizieren können. Die Kommunikationsschnittstellen zwischen den Komponenten 102, 100 können zum Beispiel gemäß einem UART (Universal Asynchronous Receiver Transmitter) Protokoll ausgebildet sein.

Die dargestellten Token 100 können eine Token-Anordnung 130 aus Token 100 unterschiedlicher Grade von Funktionalität bilden, wobei jeder der Token 100 der Token-Anordnung 130 mit jedem beliebigen der Handwerkergeräte 102 mechanisch und funktional gekoppelt werden kann.

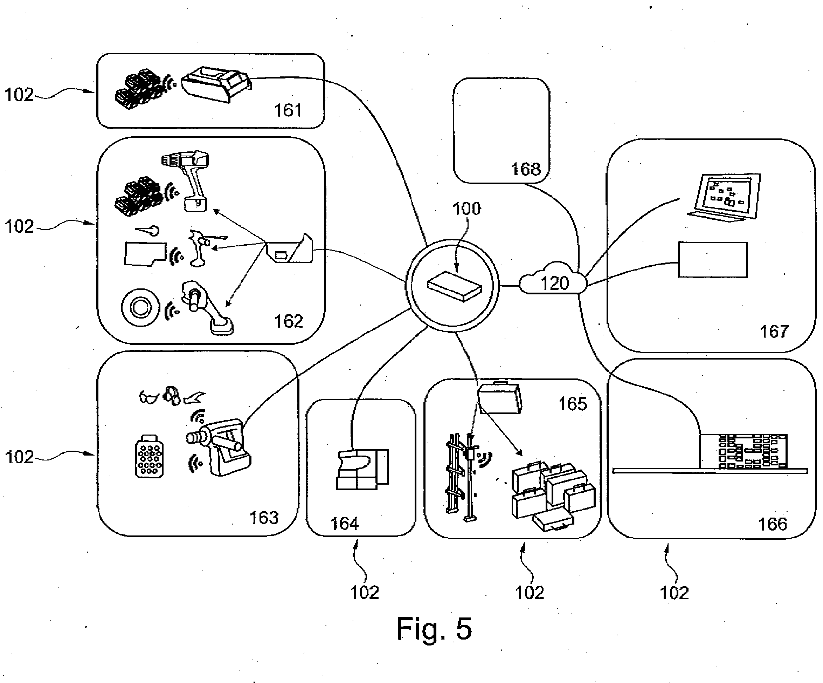

**Figur 5** zeigt eine Handwerkerausstattung 104 mit Handwerkergeräten 102 und einem Token 100 gemäß einem exemplarischen Ausführungsbeispiel der Erfindung, die in einem Kommunikationsnetzwerk 120 gekoppelt sind. Figur 5 zeigt eine modular ausgebildete Handwerkerausstattung 104 in einer Internet of Things (IoT)-Architektur.

Bezugszeichen 161 zeigt Adapter, Bezugszeichen 162 zeigt Handgeräte, Bezugszeichen 163 zeigt persönliche Schutzausrüstung und Wearables, Bezugszeichen 164 zeigt die Anwendung von Handwerkergeräten 164 einer dritten Partei, Bezugszeichen 165 zeigt Tracker-Elemente, Bezugszeichen 166 zeigt Bevorratungssysteme, Bezugszeichen 167 zeigt ein Warenbestandverwaltungssystem, und Bezugszeichen 168 zeigt einen Online-Shop. All diese Systeme können in die Token-gesteuerte Handwerkerausstattung 104 mit einbezogen werden.

Gemäß einem exemplarischen Ausführungsbeispiel der Erfindung ist es auch möglich, ein Token als Tracker in ein Handwerkergerät (zum Beispiel in ein Powertool, ein Akku-Gehäuse, etc.) zu implementieren. Dadurch kann eine Ortsbestimmung des Handwerkergeräts ermöglicht werden. Optional kann auch mindestens ein Sensor bzw. mindestens ein weiterer Sensor in den Token integriert werden, beispielsweise ein Temperatursensor und/oder ein Feuchtigkeitssensor.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Handwerkerausstattung (104), aufweisend:
eine Mehrzahl von Handwerkergeräten (102),
**dadurch gekennzeichnet, dass**
von der Mehrzahl von Handwerkergeräten (102) zumindest einige eine mechanische Aufnahmeeinrichtung (152) zum mechanischen Koppeln mit einer mechanischen Kopplungseinrichtung (110) eines Token (100) aufweisen; und
den Token (100) mit einem Prozessor (106) und mit der mechanischen Kopplungseinrichtung (110) zum wahlweisen mechanischen Koppeln mit einer jeweiligen mechanischen Aufnahmeeinrichtung (152) des jeweiligen Handwerkergeräts (102);
wobei die Handwerkergeräte (102) mindestens ein elektrisches Handgerät und ein Element aus einer Gruppe ausweisen, die besteht aus einem Werkzeug oder Werkzeugsatz, einem Bevorratungssystem und einem Verbrauchsgut.

2. Handwerkerausstattung (104) gemäß Anspruch 1, aufweisend mindestens einen weiteren Token (100) mit einem weiteren Prozessor (106) und mit einer mechanischen Kopplungseinrichtung (110) zum wahlweisen mechanischen Koppeln mit einer jeweiligen mechanischen Aufnahmeeinrichtung (152) eines jeweiligen anderen Handwerkergeräts (102).

3. Handwerkerausstattung (104) gemäß Anspruch 2, wobei der Token (100) eine Kommunikationseinrichtung (118) aufweist und der mindestens eine weitere Token (100) mindestens eine weitere Kommunikationseinrichtung (118) aufweist und die Token (100) mittels der Kommunikationseinrichtungen (118) kommunizierfähig miteinander gekoppelt sind, insbesondere direkt oder über einen Knoten eines Kommunikationsnetzwerks (120).

4. Handwerkerausstattung (104) gemäß einem der Ansprüche 1 bis 3, wobei der Token (100) ausgebildet ist, bei mechanischem Koppeln der mechanischen Kopplungseinrichtung (110) mit der mechanischen Aufnahmeeinrichtung (152) des jeweiligen Handwerkergeräts (102) mittels des Prozessors (106) das besagte Handwerkergerät (102) zu steuern.

5. Handwerkerausstattung (104) gemäß einem der Ansprüche 1 bis 4, wobei der Token (100) als Scheibe, insbesondere als Kreisscheibe, mit einem Durchmesser in einem Bereich von 1 cm bis 10 cm ausgebildet ist, insbesondere in einem Bereich von 2 cm bis 5 cm.

6. Handwerkerausstattung (104) gemäß einem der Ansprüche 1 bis 5, wobei die mechanische Kopplungseinrichtung (110) ausgebildet ist, den Token (100) von dem jeweiligen Handwerkergerät (102) abnehmbar zu koppeln.

7. Handwerkerausstattung (104) gemäß einem der Ansprüche 1 bis 6, aufweisend zumindest eines der folgenden Merkmale:
wobei die mechanische Kopplungseinrichtung (110) eine elektromechanische Schnittstelle aufweist, insbesondere eine für unterschiedliche Handwerkergeräte (102) universelle elektromechanische Schnittstelle;
wobei der Token (100) ausgebildet ist, bei mechanischem Koppeln der mechanischen Kopplungseinrichtung (110) mit einem Handwerkergerät (102) simultan eine Kommunikationsverbindung, insbesondere eine kontaktlose oder kontaktbehaftete Kommunikationsverbindung, mit dem Handwerkergerät (102) auszubilden.

8. Handwerkerausstattung (104) gemäß einem der Ansprüche 1 bis 7, wobei der Token (100) eine Kommunikationseinrichtung (118) aufweist, die zum Kommunizieren mittels eines Kommunikationsnetzwerks (120) ausgebildet ist, insbesondere mittels des öffentlichen Internets, mittels eines Intranets und/oder mittels eines Mobilfunknetzwerks.

9. Handwerkerausstattung (104) gemäß Anspruch 8, wobei der Token (100) ausgebildet ist, mittels der Kommunikationseinrichtung (118) mit mindestens einem kommunizierfähig gekoppelten Knoten des Kommunikationsnetzwerks (120) zu kommunizieren, der aus einer Gruppe ausgewählt ist, die besteht aus einem anderen Token (100), einem portablen Benutzerendgerät (122) mit einer darauf gespeicherten App, einer zentralen Steuereinrichtung (124), und einer Nachbestelleinrichtung (126) zum Nachbestellen von Verbrauchsgütern zum Betrieb eines Handwerkergeräts (102).

10. Handwerkerausstattung (104) gemäß Anspruch 8 oder 9, wobei der Token (100) ausgebildet ist, mittels der Kommunikationseinrichtung (118) von einem kommunizierfähig gekoppelten Knoten des Kommunikationsnetzwerks (120) einen Datensatz herunterzuladen, insbesondere einen einen Betriebsablauf des Handwerkergeräts (102) definierenden Datensatz und/oder einen ein Benutzerprofil eines Benutzers des Token (100) definierenden Datensatz.

11. Handwerkerausstattung (104) gemäß einem der Ansprüche 8 bis 10, wobei der Token (100) ausgebildet ist, mittels der Kommunikationseinrichtung (118) zu einem kommunizierfähig gekoppelten Knoten des Kommunikationsnetzwerks (120) einen Datensatz heraufzuladen, insbesondere einen Betriebsergebnisse und/oder Betriebsparameter eines Betriebs des Handwerkergeräts (102) enthaltenden Datensatz.

12. Handwerkerausstattung (104) gemäß einem der Ansprüche 1 bis 11, wobei der Prozessor (106) ausgebildet ist, den Betrieb des mit dem Token (100) gekoppelten Handwerkergeräts (102) in Einklang mit einem in dem Token (100) gespeicherten oder dem Token (100) zugänglichen personalisierten Benutzerprofil, insbesondere in Einklang mit einem personalisierten Benutzerberechtigungsprofil, des Benutzers des Token (100) zu steuern.

13. Handwerkerausstattung (104) gemäß Anspruch 12, aufweisend zumindest eines der folgenden Merkmale:
wobei der Prozessor (106) ausgebildet ist, bei Koppeln mit einem jeweiligen Handwerkergerät (102) eine Benutzung des Handwerkergeräts (102) durch den Benutzer basierend auf dem personalisierten Berechtigungsprofil zuzulassen, einzustellen und/oder zu unterbinden;
wobei der Token (100) eine Identifizierungseinrichtung (170) zum Identifizieren eines Benutzers des Token (100) aufweist, wobei insbesondere der Prozessor (106) ausgebildet ist, den Betrieb des mit dem Token (100) gekoppelten Handwerkergeräts (102) nur dann freizugeben, wenn eine mittels des Token (100) vorab durchgeführte Benutzeridentifizierung zu dem Ergebnis geführt hat, dass ein sich identifizierender Benutzer für den Betrieb des Handwerkergeräts (102) berechtigt ist.

14. Handwerkerausstattung (104) gemäß einem der Ansprüche 1 bis 13, aufweisend zumindest eines der folgenden Merkmale:
wobei die Handwerkergeräte (102) mindestens ein elektrisches Handgerät aufweisen, insbesondere aus einer Gruppe, die besteht aus einer Bohrmaschine, einem Akkuschrauber, einem Akku-Bohrschrauber, einem Drehschrauber, einem Impulsschrauber, einem Ratschenschrauber, einem Schlagschrauber, insbesondere einem Akku-Schlagschrauber, einem Hammerbohrer, einem kabelgebundenen Handgerät und einem druckluftbetriebenen Handgerät;
wobei das Werkzeug als ein Werkzeug aus einer Gruppe ausgebildet ist, die besteht aus einem Hammer, einer Zange, einer Feile, einem Schraubendreher, einem Bohrer, einem Bit und einer Nuss für eine Ratsche;
wobei das Bevorratungssystem als ein Bevorratungssystem aus einer Gruppe ausgebildet ist, die besteht aus einem Koffer, einem Regal, einer Schublade und einer Kiste;
wobei das Verbrauchsgut als ein Verbrauchsgut aus einer Gruppe ausgebildet ist, die besteht aus einer Schraube, einem Dübel, einem Bolzenanker, einem Nagel, einem Niet, und einer Packung mit solchen Verbrauchsgütern;
wobei die Gruppe des Weiteren ein Fahrzeug aufweist, das als ein Fahrzeug aus einer Gruppe ausgebildet ist, die besteht aus einem motorisch, insbesondere elektrisch und/oder mittels eines Verbrennungsmotors, angetriebenen Fahrzeug und einem mit Muskelkraft angetriebenen Fahrzeug.

15. Verfahren zum benutzerbezogenen Verwalten von Handwerkergeräten (102) mittels eines Token (100) einer Handwerkerausstattung (104) gemäß einem der Ansprüche 1 bis 14, wobei das Verfahren aufweist:
mechanisches Koppeln der mechanischen Kopplungseinrichtung (110) des Token (100) mit einer mechanischen Aufnahmeeinrichtung (152) von einem ausgewählten der Handwerkergeräte (102); und
nach erfolgtem mechanischen Koppeln, Steuern des gekoppelten Handwerkergeräts (102) mittels des Prozessors (106) des Token (100).

## Claims

1. A handicraft equipment (104), comprising:
a plurality of handicraft devices (102),
**characterized in that**
of the plurality of handicraft devices (102), at least some have a mechanical receiving device (152) for mechanically coupling to a mechanical coupling device (110) of a token (100); and
the token (100) having a processor (106) and having the mechanical coupling device (110) for selectively mechanically coupling to a respective mechanical receiving device (152) of the respective handicraft device (102);
wherein the handicraft devices (102) comprise at least one electrical hand-held device and an element from a group consisting of a tool or tool set, a storage system and a consumable item.

2. The handicraft equipment (104) according to claim 1, comprising at least one further token (100) having a further processor (106) and having a mechanical coupling device (110) for selectively mechanically coupling to a respective mechanical receiving device (152) of a respective other handicraft device (102).

3. The handicraft equipment (104) according to claim 2, wherein the token (100) comprises a communication device (118) and the at least one further token (100) comprises at least one further communication device (118) and the tokens (100) are coupled to one another in a communicable manner by means of the communication devices (118), in particular directly or via a node of a communication network (120).

4. The handicraft equipment (104) according to one of claims 1 to 3, wherein the token (100) is designed to control said handicraft device (102) when the mechanical coupling device (110) is mechanically coupled to the mechanical receiving device (152) of the respective handicraft device (102) by means of the processor (106).

5. The handicraft equipment (104) according to one of claims 1 to 4, wherein the token (100) is designed as a disc, in particular as a circular disc, with a diameter in a range of 1 cm to 10 cm, in particular in a range of 2 cm to 5 cm.

6. The handicraft equipment (104) according to one of claims 1 to 5, wherein the mechanical coupling device (110) is designed to couple the token (100) removably from the respective handicraft device (102).

7. The handicraft equipment (104) according to one of claims 1 to 6, comprising at least one of the following features:
wherein the mechanical coupling device (110) comprises an electromechanical interface, in particular an electromechanical interface that is universal for different handicraft devices (102);
wherein the token (100) is designed to simultaneously form a communication connection, in particular a contactless or contact-type communication connection, with the handicraft device (102) when the mechanical coupling device (110) is mechanically coupled to a handicraft device (102).

8. The handicraft equipment (104) according to one of claims 1 to 7, wherein the token (100) comprises a communication device (118) that is designed to communicate by means of a communication network (120), in particular by means of the public Internet, by means of an intranet and/or by means of a mobile radio network.

9. The handicraft equipment (104) according to claim 8, wherein the token (100) is designed to communicate by means of the communication device (118) with at least one communicably coupled node of the communication network (120) that is selected from a group consisting of another token (100), a portable user terminal (122) having an app stored thereon, a central control device (124), and a post-order device (126) for post-ordering consumable items for operating a handicraft device (102).

10. The handicraft equipment (104) according to claim 8 or 9, wherein the token (100) is designed to download a data record from a communicably coupled node of the communication network (120) by means of the communication device (118), in particular a data record defining an operating sequence of the handicraft device (102) and/or a data record defining a user profile of a user of the token (100).

11. The handicraft equipment (104) according to one of claims 8 to 10, wherein the token (100) is designed to download a data record to a communicably coupled node of the communication network (120) by means of the communication device (118), in particular a data record containing operating results and/or operating parameters of an operation of the handicraft device (102).

12. The handicraft equipment (104) according to one of claims 1 to 11, wherein the processor (106) is designed to control the operation of the handicraft device (102) coupled to the token (100) in accordance with a personalized user profile of the user of the token (100) stored in the token (100) or accessible to the token (100), in particular in accordance with a personalized user authorization profile.

13. The handicraft equipment (104) according to claim 12, comprising at least one of the following features:
wherein the processor (106) is designed to allow, set and/or prevent a use of the handicraft device (102) by the user based on the personalized authorization profile when coupled to a respective handicraft device (102);
wherein the token (100) comprises an identification device (170) for identifying a user of the token (100), wherein in particular the processor (106) is designed to enable the operation of the handicraft device (102) coupled to the token (100) only if a user identification carried out in advance by means of the token (100) has led to the result that an identifying user is authorized for the operation of the handicraft device (102).

14. The handicraft equipment (104) according to one of claims 1 to 13, comprising at least one of the following features:
wherein the handicraft devices (102) comprise at least one electrical hand-held device, in particular from a group consisting of a drilling machine, a cordless screwdriver, a cordless drilling screwdriver, a rotary screwdriver, an impulse screwdriver, a ratchet screwdriver, an impact screwdriver, in particular a cordless impact screwdriver, a hammer drill, a cable-bound hand-held device and a compressed air-operated hand-held device;
wherein the tool is designed as a tool from a group consisting of a hammer, pliers, a file, a screwdriver, a drill, a bit and a nut for a ratchet;
wherein the storage system is designed as a storage system from a group consisting of a suitcase, a shelf, a drawer and a box;
wherein the consumable item is designed as a consumable item from a group consisting of a screw, a dowel, a bolt anchor, a nail, a rivet and a pack with such consumable items;
wherein the group furthermore comprises a vehicle which is designed as a vehicle from a group consisting of a vehicle driven by a motor, in particular electrically and/or by means of an internal combustion engine, and a vehicle driven by muscle power.

15. A method for user-related management of handicraft devices (102) by means of a token (100) of a handicraft equipment (104) according to one of claims 1 to 14, wherein the method comprises:
mechanically coupling the mechanical coupling device (110) of the token (100) to a mechanical receiving device (152) of a selected one of the handicraft devices (102); and
after mechanical coupling has taken place, controlling the coupled handicraft device (102) by means of the processor (106) of the token (100).

## Revendications

1. Équipement d'outillage (104), présentant :
une pluralité d'appareils d'outillage (102), **caractérisé en ce que**
parmi la pluralité d'appareils d'outillage (102), au moins certains présentent un dispositif de réception mécanique (152) pour un couplage mécanique avec un dispositif de couplage mécanique (110) d'un jeton (100) ; et
le jeton (100) avec un processeur (106) et avec le dispositif de couplage mécanique (110) destinés à un couplage de manière sélective et mécanique avec un dispositif de réception mécanique respectif (152) de l'appareil d'outillage respectif (102) ;
dans lequel les appareils d'outillage (102) présentent au moins un appareil portatif électrique et un élément d'un groupe constitué d'un outil ou d'un ensemble d'outils, d'un système de stockage et d'un produit de consommation.

2. Équipement d'outillage (104) selon la revendication 1, présentant au moins un jeton supplémentaire (100) avec un processeur supplémentaire (106) et avec un dispositif de couplage mécanique (110) pour le couplage sélectif et mécanique avec un dispositif de réception mécanique respectif (152) d'un autre appareil d'outillage (102) respectif.

3. Équipement d'outillage (104) selon la revendication 2, dans lequel le jeton (100) présente un dispositif de communication (118) et au moins un jeton supplémentaire (100) qui présente au moins un dispositif de communication supplémentaire (118), et les jetons (100) sont couplés entre eux de manière à pouvoir communiquer au moyen des dispositifs de communication (118), en particulier directement ou via un nœud d'un réseau de communication (120).

4. Équipement d'outillage (104) selon l'une quelconque des revendications 1 à 3, dans lequel le jeton (100) est conçu pour commander ledit appareil d'outillage (102) au moyen du processeur (106) lors du couplage mécanique du dispositif de couplage mécanique (110) avec le dispositif de réception mécanique (152) de l'appareil d'outillage (102) respectif.

5. Équipement d'outillage (104) selon l'une quelconque des revendications 1 à 4, dans lequel le jeton (100) est réalisé sous la forme d'un disque, en particulier d'un disque circulaire, avec un diamètre dans une plage allant de 1 cm à 10 cm, en particulier dans une plage allant de de 2 cm à 5 cm.

6. Équipement d'outillage (104) selon l'une quelconque des revendications 1 à 5, dans lequel le dispositif de couplage mécanique (110) est réalisé pour coupler le jeton (100) de manière à pouvoir le retirer de l'appareil d'outillage (102) respectif.

7. Équipement d'outillage (104) selon l'une quelconque des revendications 1 à 6, présentant au moins une des caractéristiques ci-dessous :
dans lequel le dispositif de couplage mécanique (110) présente une interface électromécanique, en particulier une interface électromécanique universelle destinée à différents appareils d'outillage (102).
dans lequel le jeton (100) est réalisé pour former simultanément une liaison de communication, en particulier une liaison de communication sans contact ou avec contact, avec l'appareil d'outillage (102) lors du couplage mécanique du dispositif de couplage mécanique (110) avec un appareil d'outillage (102).

8. Équipement d'outillage (104) selon l'une quelconque des revendications 1 à 7, dans lequel le jeton (100) présente un dispositif de communication (118) qui est réalisé pour communiquer au moyen d'un réseau de communication (120), en particulier au moyen de l'Internet public, au moyen d'un intranet et/ou au moyen d'un réseau de téléphonie mobile.

9. Équipement d'outillage (104) selon la revendication 8, le jeton (100) est conçu pour communiquer au moyen du dispositif de communication (118) avec au moins un nœud du réseau de communication (120), ledit nœud étant couplé de manière à pouvoir communiquer et étant sélectionné dans un groupe constitué d'un autre jeton (100), d'un terminal utilisateur portable (122) sur lequel est stockée une application, d'un dispositif de commande central (124) et d'un dispositif de réassort (126) permettant de commander à nouveau des biens de consommation afin de faire fonctionner un appareil d'outillage (102).

10. Équipement d'outillage (104) selon la revendication 8 ou 9, dans lequel le jeton (100) est conçu pour télécharger, au moyen du dispositif de communication (118), un ensemble de données à partir d'un nœud du réseau de communication (120) couplé de manière à pouvoir communiquer, en particulier un ensemble de données définissant une séquence de fonctionnement de l'appareil d'outillage (102) et/ou un ensemble de données définissant un profil d'utilisateur d'un utilisateur du jeton (100).

11. Équipement d'outillage (104) selon l'une quelconque des revendications 8 à 10, dans lequel le jeton (100) est conçu pour télécharger un ensemble de données au moyen du dispositif de communication (118) vers un nœud du réseau de communication (120) couplé de manière à pouvoir communiquer, en particulier un ensemble de données contenant des résultats de fonctionnement et/ou des paramètres de fonctionnement d'un fonctionnement de l'appareil d'outillage (102).

12. Équipement d'outillage (104) selon l'une quelconque des revendications 1 à 11, dans lequel le processeur (106) est conçu pour commander le fonctionnement de l'appareil d'outillage (102) couplé au jeton (100) en conformité avec un profil d'utilisateur personnalisé stocké dans le jeton (100) ou accessible au jeton (100), en particulier en conformité avec un profil d'autorisation d'utilisateur personnalisé, de l'utilisateur du jeton (100).

13. Équipement d'outillage (104) selon la revendication 12, présentant au moins une des caractéristiques ci-dessous :
dans lequel le processeur (106) est conçu pour permettre, régler et/ou interdire l'utilisation d'un appareil d'outillage respectif (102) par l'utilisateur en fonction du profil d'autorisation personnalisé lors du couplage avec un appareil d'outillage (102) respectif ;
dans lequel le jeton (100) comporte un dispositif d'identification (170) pour identifier un utilisateur du jeton (100), dans lequel en particulier le processeur (106) est conçu pour n'autoriser le fonctionnement de l'appareil d'outillage (102) couplé au jeton (100) que si une identification d'utilisateur effectuée à l'avance au moyen du jeton (100) a conduit à la conclusion que l'utilisateur en train de s'identifier est autorisé à faire fonctionner l'appareil d'outillage (102).

14. Équipement d'outillage (104) selon l'une quelconque des revendications 1 à 13, présentant au moins une des caractéristiques ci-dessous :
dans lequel les appareils d'outillage (102) présentent au moins un appareil portatif électrique, en particulier issu d'un groupe constitué d'une perceuse, d'une visseuse sans fil, d'une perceuse-visseuse sans fil, d'une visseuse électrique, d'une visseuse à impulsions, d'une visseuse à cliquet, d'une visseuse à chocs, en particulier d'une visseuse à chocs sans fil, d'une perceuse à percussion, d'un appareil d'outillage câblé et d'un appareil d'outillage pneumatique ;
dans lequel l'outil est conçu comme un outil d'un groupe constitué d'un marteau, d'une pince, d'une lime, d'un tournevis, d'une perceuse, d'un embout et d'une douille pour un cliquet ;
dans lequel le système de stockage est conçu sous la forme d'un système de stockage issu d'un groupe constitué d'une valise, d'une étagère, d'un tiroir et d'une caisse ;
dans lequel le produit de consommation est conçu sous la forme d'un produit de consommation issu d'un groupe constitué d'une vis, d'une cheville, d'un boulon d'ancrage, d'un clou, d'un rivet et d'un emballage de tels produits de consommation ;
dans lequel le groupe comprend en outre un véhicule qui est conçu sous la forme d'un véhicule issu d'un groupe constitué d'un véhicule propulsé par un moteur, en particulier électrique et/ou par un moteur à combustion interne, et d'un véhicule propulsé par une force musculaire.

15. Procédé de gestion d'appareils d'outillage (102) en fonction de l'utilisateur au moyen d'un jeton (100) d'un équipement d'outillage (104) selon l'une quelconque des revendications 1 à 14, dans lequel le procédé comprend les étapes consistant à :
coupler de manière mécanique le dispositif de couplage mécanique (110) du jeton (100) avec un dispositif de réception mécanique (152) d'un appareil d'outillage (102) sélectionné ; et
après le couplage mécanique, commander l'appareil d'outillage couplé (102) à l'aide du processeur (106) du jeton (100).
